# EUROPEAN PATENT SPECIFICATION

(11) **EP 3 805 089 B1**
(45) Date of publication and mention of the grant of the patent: **19.04.2023**
(21) Application number: 19812625.2
(22) Date of filing: 27.05.2019
(51) Int. Cl.: B63B 49/00, B63B 43/18, G01B 11/00

(54) **SHIP DOCKING ASSISTING APPARATUS AND SHIP DOCKING ASSISTING METHOD**
VORRICHTUNG UND VERFAHREN ZUR UNTERSTÜTZUNG EINES SCHIFFES
APPAREIL D'AIDE À L'AMARRAGE DE NAVIRES ET PROCÉDÉ D'AIDE À L'AMARRAGE DE NAVIRES

(30) Priority: 29.05.2018 JP 2018102337
(43) Date of publication of application: 14.04.2021
(73) Proprietor: Yamaha Hatsudoki Kabushiki Kaisha, Iwata-shi, Shizuoka 438-8501 (JP)
(72) Inventor: ISHII, Takahiro, Iwata-shi, Shizuoka 438-8501 (JP)
(74) Representative: Grünecker Patent- und Rechtsanwälte PartG mbB
(86) International application number: PCT/JP2019/020800
(87) International publication number: WO 2019/230620

(56) References cited:
- JP-A- 2004 175 187
- JP-A- 2006 137 309
- JP-A- 2018 001 945

## Description

The present teaching relates to a ship docking assisting apparatus and a ship docking assisting method which are used for docking a ship.

A ship docking assisting apparatus used for docking a ship has been proposed. As a docking assisting apparatus used for docking a ship, a ship docking assisting apparatus recited in Patent Literature 1 has been known. The ship docking assisting apparatus of Patent Literature 1 includes a plurality of cameras provided on a ship body. After a ship is positioned to be parallel to a wharf at which the ship is to be docked, the docking assisting apparatus take images of a docking target at around the wharf by the cameras. Based on location information regarding the docking target calculated by processing the taken images of the docking target, the ship docking assisting apparatus of Patent Literature 1 displays the relative positional relation between the ship body and the docking target at around the wharf and the movement of the ship body such as the docking speed of the ship body. In this way, the ship docking assisting apparatus of Patent Literature 1 makes it easy to dock the ship.

### [Citation List]

### [Patent Literatures]

[Patent Literature 1] Japanese Patent No. 4214219

Prior art document JP 2018-001945 A discloses a vessel having a hull; engines that are arranged in the hull; jet-propulsion units and a side thruster that generate propulsion forces for moving the hull. Distance measurement units that measure distances to an object and a speed detection unit that detects a vessel speed are provide. Moreover, the vessel is provided with a control unit that executes berthing/deberthing assistance control for causing the jet-propulsion units and the side thruster to generate propulsion forces for moving the hull in a direction opposed to a direction toward the object on the basis of the distances to the object measured by the distance measurement units and the vessel speed detected by the speed detection unit.

The ship docking assisting apparatus and the ship docking assisting method are required to assist a ship to be accurately docked with reduced hardware resource. An object of the present teaching is to provide a ship docking assisting apparatus which is configure to assist a ship to be accurately docked with reduced hardware resource. Another object of the present teaching is to provide a ship docking assisting method of assisting a ship to be accurately docked with reduced hardware resource by using a ship docking assisting apparatus. According to the present invention said object is solved by a ship docking assisting apparatus having the features of independent claim 1. Moreover, said object is solved by a ship docking assisting method having the features of independent claim 8. Preferred embodiments are laid down in the dependent claims.

After approaching a shore to some extent by an approaching operation, a ship performs a docking operation which is different from the approaching operation. The docking operation is an operation to cause a ship which is positioned to be parallel to a wharf to make contact with or to move very close to the wharf. The approaching operation is, for example, an operation until the ship is positioned to be parallel to the wharf. The inventors of the subject application found that, when docking of a ship is performed, the docking was facilitated if not only the docking operation which was performed when the distance between the ship body and the wharf was short but also the approaching operation which was performed when the distance between the ship body and the wharf was long were assisted.

In order to assist the approaching operation, the inventors of the subject application tried to detect the relative locations of the ship body and the wharf which was the docking target, by a camera which was provided not at a side part but at a front part of the ship body. However, in the approaching operation, it was difficult to accurately detect the relative positions of the ship body and the docking target based on an image taken by the camera on the ship body, because the distance between the ship body and the docking target was long.

The inventors of the subject application have found that it is necessary to accurately detect a docking target in order to accurately detect relative positions of the ship body and the docking target. The inventors of the subject application have noticed that, when an image of a water surface is taken in addition to an image of the docking target, information of the docking target is accurately sampled from plural sets of image information having been taken, even when the distance between the ship body and the docking target is long. Because, while the ship is moving, the shape of the water surface tends to change whereas the shape of the docking target does not change, it is easy to detect the docking target from the plural sets of image information having been taken. It is therefore possible to accurately detect the docking target even when the distance between the ship body and the docking target is long. The inventors of the subject application have found that at least one relative positional relation between the ship body and the docking target in distance and direction can be calculated based on plural sets of the image information including the docking target and the water surface, which are acquired by an imaging device while the ship body is moved forward in a ship body front-rear direction. The inventors of the subject application have noticed that the calculated at least one relative positional relation can be used for assisting docking which includes the approaching operation and the docking operation. To be more specific, at least one relative positional relation is output as ship information and the ship information is used for assisting the docking. Furthermore, in the approaching operation, plural sets of image information which are different in distance can be obtained because the distance between the ship body and the docking target is long. In other words, by using image information taken when the distance is long, it is possible to detect information of the surroundings of the docking target, in addition to the information of the docking target. Meanwhile, in the docking operation, plural sets of image information which are substantially identical in distance can be obtained, because the distance between the ship body and the docking target is short and hence the speed of the ship body is low. In other words, by using image information taken when the distance is short, it is possible to further accurately detect the information of the docking target. In summary, in accordance with the approaching operation and the docking operation, it is possible to assist the docking to be accurately done by using the information of the docking target and the information of the surroundings of the docking target, which are detected from plural sets of image information.

Meanwhile, when at least one relative positional relation is calculated and stored as ship information while the ship body is moving, it is unnecessary to store map information in a storage device in advance for assisting the docking. This map information includes the location of the docking target within a range of movement of the ship body in the approaching operation and the docking operation. It is therefore possible to reduce the region of the storage device and to reduce the hardware resource. Furthermore, the at least one relative positional relation which is calculated while the ship body is moving and is stored as the ship information is easily used for assisting the docking of the ship. Because the ship information can be easily used, the ship information can be easily processed by a device to which the ship information is output. In other words, it is possible to reduce the hardware resource by improving the efficiency in the processing of the ship information by the device to which the ship information is output.
(1) A ship docking assisting apparatus of the present teaching, which assists docking of a ship by outputting ship information related to the ship to an assist target device, includes: a storage device configured to store information; and a ship docking assist processor configured to assist docking of the ship by: acquiring image information which is taken by an imaging device mounted on the ship and includes a docking target and a water surface, the docking target being an object which is a shore at which the ship is docked or an object in the vicinity of the shore and is used as a mark when the ship is docked; calculating at least one relative positional relation which indicates the relation in distance and direction between a ship body of the ship and the docking target, from plural sets of the image information including the docking target and the water surface, which are acquired while the ship body is moved forward in a ship body front-rear direction by a propulsion unit which is provided in the ship body of the ship to generate propulsion force for moving the ship body; storing the at least one relative positional relation in the storage device as the ship information; and outputting the ship information stored in the storage device to the assist target device.

According to this arrangement, the ship docking assisting apparatus assists the docking of a ship by outputting ship information related to the ship to the assist target device. The ship docking assisting apparatus includes the storage device and the ship docking assist processor. The storage device stores information. The imaging device takes an image including the docking target and the water surface. The imaging device is mounted on the ship. The docking target is an object which is a shore at which the ship is docked or an object in the vicinity of the shore, and is used as a mark when the ship is docked at the shore. The ship docking assist processor acquires image information including the docking target and the water surface taken by the imaging device. On this account, the ship docking assisting apparatus is able to acquire the image information of the docking target taken by the imaging device, in the approaching operation. The ship docking assist processor acquires a plurality of sets of image information of both the docking target and the water surface. The sets of the image information are at least two sets of image information of both the docking target and the water surface. Alternatively, the ship docking assist processor may acquire image information of only one of the docking target and the water surface. Alternatively, the ship docking assist processor may acquire image information of none of the docking target and the water surface. Because, while the ship is moving, the shape of the water surface tends to change whereas the shape of the docking target does not change, it is easy to detect the docking target from the plural sets of image information. For this reason, even if the distance between the ship body and the docking target is long, it is possible to accurately sample the information of the docking target from the sets of image information having been taken. The ship docking assist processor then calculates at least one relative positional relation between the ship body and the docking target in distance and direction from plural sets of the image information including the docking target and the water surface, which are acquired by the imaging device while the ship body is moved forward in the ship body front-rear direction. The ship body is moved forward in the ship body front-rear direction by the propulsion unit which generates propulsion force for moving the ship body. The propulsion unit is provided in the ship body. The ship docking assist processor stores the at least one relative positional relation in the storage device, as ship information. The ship docking assist processor then assists the docking by outputting the ship information stored in the storage device to the assist target device. Furthermore, in the approaching operation, plural sets of image information which are different in distance can be obtained because the distance between the ship body and the docking target is long. In other words, by using image information taken when the distance is long, it is possible to detect information of the surroundings of the docking target, in addition to the information of the docking target. Meanwhile, in the docking operation, plural sets of image information which are substantially identical in distance can be obtained, because the distance between the ship body and the docking target is short. In other words, by using image information taken when the distance is short, it is possible to further accurately detect the information of the docking target. In summary, in accordance with the approaching operation and the docking operation, the ship docking assisting apparatus is able to assist the docking to be accurately done by using the information of the docking target and the information of the surroundings of the docking target, which are detected from plural sets of image information. Furthermore, because the at least one relative positional relation calculated while the ship body is moving is output as the ship information, it is unnecessary to store map information in the storage device of the ship docking assisting apparatus or the assist target device in advance. This map information includes the location of the docking target within a range of movement of the ship body in the approaching operation and the docking operation. It is therefore possible to reduce the region of the storage device of the ship docking assisting apparatus or the assist target device, and to reduce the hardware resource of the ship docking assisting apparatus or the assist target device. The at least one relative positional relation which is output as the ship information can be easily used for assisting the docking of the ship by the assist target device. Because the ship information can be easily used, the ship information can be easily processed in the assist target device. It is therefore possible to reduce the hardware resource by improving the efficiency of the processing of the ship information in the assist target device. As such, the ship docking assisting apparatus of the present teaching is able to assist the ship to be accurately docked, while reducing the hardware resource.

(2) According to an aspect of the present teaching, the ship docking assisting apparatus of the present teaching preferably includes the following arrangement, in addition to the arrangement (1). The imaging device is mounted on the ship to be able to take an image of the docking target and the water surface which are located forward of the ship body, while the ship body is moved forward in the ship body front-rear direction by the propulsion unit.

According to this arrangement, the imaging device is arranged to be able to take an image of the docking target and the water surface in front of the ship body in the ship body front-rear direction, while the ship body moves forward in the ship body front-rear direction by the propulsion unit. For example, the imaging device is provided at a front portion of the ship body. On this account, when the ship is moving forward in the approaching operation, it is easy to take an image of the docking target and the water surface. In other words, the ship docking assist processor can easily obtain image information in which an image of the docking target taken by the imaging device is included. As such, the ship docking assisting apparatus of the present teaching is able to assist the ship to be further accurately docked, while reducing the hardware resource.

(3) According to an aspect of the present teaching, the ship docking assisting apparatus of the present teaching preferably includes the following arrangement, in addition to the arrangement (1) or (2).

The ship docking assist processor displays an image including the docking target and the water surface on a display which is configured to display information and mounted on the ship, based on image information taken by the imaging device and
the ship docking assist processor obtains information of the docking target input by an operator by using an input device which allows input of information and is mounted on the ship, when the image including the docking target and the water surface is displayed on the display.

According to this arrangement, the ship docking assist processor displays, on the display, an image including the docking target and the water surface, based on image information taken by the imaging device. The display is an apparatus which is mounted on the ship and is configured to display information. Furthermore, the ship docking assist processor acquires information of the docking target set by the operator using the input device, while an image including the docking target and the water surface is displayed on the display. The input device is an apparatus which is mounted on the ship and is configured to input information. This allows the operator of the ship to set the docking target at will. The ship docking assisting apparatus of the present teaching is able to assist the ship to be further accurately docked at a shore desired by the operator, while reducing the hardware resource.

(4) According to an aspect of the present teaching, the ship docking assisting apparatus of the present teaching preferably includes the following arrangement, in addition to any one of the arrangements (1) to (3).

The ship docking assist processor calculates relative speed of the ship body from a plurality of the at least one relative positional relation, and
stores the relative speed of the ship body relative to the docking target in the storage device, as the ship information.

According to this arrangement, the ship docking assist processor calculates the speed of the ship body relative to the docking target, based on plural relative positional relations. The ship docking assist processor then stores the relative speed of the ship body in the storage device as ship information. The ship docking assist processor is therefore able to further output the relative speed of the ship body as ship information. In this way, the ship docking assisting apparatus is able to use the relative positional relation between the ship body and the docking target and the relative speed of the ship body, for assisting the docking. As such, the ship docking assisting apparatus of the present teaching is able to assist the ship to be further accurately docked, while reducing the hardware resource.

(5) According to an aspect of the present teaching, the ship docking assisting apparatus of the present teaching preferably includes the following arrangement, in addition to any one of the arrangements (1) to (4).

The ship docking assist processor calculates, from the at least one relative positional relation, (i) a target angle which is an angle between a bow direction which is a forward direction of the ship body and a target direction which is a direction of the docking target relative to the ship body, (ii) an approach angle which is an angle between the bow direction and a docking direction which is a direction of a border line between a shore at which the ship body is docked and the water surface, and (iii) a target distance which is the shortest distance between the ship body and the docking target, and the ship docking assist processor stores the target angle, the approach angle, and the target distance in the storage device as the ship information.

According to this arrangement, the ship docking assist processor calculates a target angle, an approach angle, and a target distance based on at least one relative positional relation. The target angle is an angle between a bow direction and a target direction. The bow direction is a forward direction of the ship body. The target direction is a direction in which the docking target is located relative to the ship body. The approach angle is an angle formed between a docking direction and the bow direction. The docking direction is a direction of the border line between the shore at which the ship body is docked and the water surface. When the ship is positioned to be parallel to the wharf and then the ship is docked by making contact with or coming very close to the wharf, the docking direction is parallel to the ship body front-rear direction of the ship body when the ship is docked at the shore. The target distance is the shortest distance between the ship body and the docking target. The ship docking assist processor then stores the target angle, the approach angle, and the target distance having been calculated in the storage device, as ship information. In other words, the target angle, the approach angle, and the target distance are output to the assist target device and used for assisting the docking. The target angle, the approach angle, and the target distance which are output as ship information are easily used for assisting the docking of the ship by the assist target device. Because the ship information can be easily used, the ship information can be easily processed in the assist target device. It is therefore possible to further reduce the hardware resource by further improving the efficiency of the processing of the ship information in the assist target device. As such, the ship docking assisting apparatus of the present teaching is able to assist the ship to be further accurately docked, while further reducing the hardware resource.

(6) According to an aspect of the present teaching, the ship docking assisting apparatus of the present teaching preferably includes the following arrangement, in addition to any one of the arrangements (1) to (5).

The assist target device is a propulsion unit controller which is able to control the propulsion unit, the ship docking assist processor outputs the ship information from the storage device to the propulsion unit controller, and
the propulsion unit controller generates a command signal for controlling the propulsion unit by using the ship information, and controls the propulsion unit by the command signal so that the ship body is automatically moved.

According to this arrangement, the assist target device is a propulsion unit controller which is able to control the propulsion unit. The ship docking assist processor is configured to output ship information from the storage device to the propulsion unit controller. The propulsion unit controller generates a command signal for controlling the propulsion unit, by using output ship information. By using the generated command signal, the propulsion unit controller controls the propulsion unit so that the ship body moves automatically. The propulsion unit is provided in the ship body to generate propulsion force for moving the ship body. The ship docking assisting apparatus is therefore able to assist the approaching operation and the docking operation to be automatically done until the ship is docked. In the propulsion unit controller which is the assist target device, the ship information is easily used for assisting the docking of the ship. Because the ship information can be easily used, the ship information can be easily processed in the propulsion unit controller which is an assist target device. It is therefore possible to reduce the hardware resource by further improving the efficiency of the processing of the ship information in the propulsion unit controller which is an assist target device. On this account, the ship docking assisting apparatus of the present teaching is able to assist the ship to be further accurately docked, while further reducing the hardware resource.

(7) According to an aspect of the present teaching, the ship docking assisting apparatus of the present teaching preferably includes the following arrangement, in addition to any one of the arrangements (1) to (5).

The assist target device is a propulsion unit controller which is able to control the propulsion unit, the ship docking assist processor outputs the ship information from the storage device to the propulsion unit controller, and
in accordance with an operation by an operator, the propulsion unit controller generates a command signal for controlling the propulsion unit by using the ship information output from the storage device, and controls the propulsion unit by the command signal.

According to this arrangement, the assist target device is a propulsion unit controller which is able to control the propulsion unit. The ship docking assist processor is configured to output ship information from the storage device to the propulsion unit controller. in accordance with an operation by an operator, the propulsion unit controller generates a command signal for controlling the propulsion unit by using the ship information output from the storage device. The propulsion unit controller then controls the propulsion unit by using the command signal. With this, the ship docking assisting apparatus is able to assist the operations by the operator in the approaching operation and docking operation until the ship is docked. In the propulsion unit controller which is the assist target device, the ship information is easily used for assisting the docking of the ship. Because the ship information can be easily used, the ship information can be easily processed in the propulsion unit controller which is an assist target device. It is therefore possible to reduce the hardware resource by further improving the efficiency of the processing of the ship information in the propulsion unit controller which is an assist target device. On this account, the ship docking assisting apparatus of the present teaching is able to assist the ship to be further accurately docked, while further reducing the hardware resource.

(8) According to an aspect of the present teaching, the ship docking assisting apparatus of the present teaching preferably includes the following arrangement, in addition to any one of the arrangements (1) to (7).

The assist target device is a display which is configured to display information,
the ship docking assist processor outputs the ship information from the storage device to the display, and
the display displays the ship information or information generated based on the ship information.

According to this arrangement, the assist target device is a display. The display displays information. The ship docking assist processor outputs ship information from the storage device to the display. The display displays ship information or information generated based on the ship information. The display displays ship information. In addition, the display displays information generated based on the ship information (e.g., an operating method in the approaching operation and the docking operation). With this, the ship docking assisting apparatus is able to assist the operator of the ship who sees the display to perform operations in consideration of the ship information, in the approaching operation and docking operation until the ship is docked. In the display which is the assist target device, the ship information is easily used for assisting the docking of the ship. Because the ship information can be easily used, the ship information can be easily processed in the display which is the assist target device. It is therefore possible to reduce the hardware resource by further improving the efficiency of the processing of the ship information in the display which is the assist target device. On this account, the ship docking assisting apparatus of the present teaching is able to assist the ship to be further accurately docked, while further reducing the hardware resource.

(9) A ship docking assisting method of the present teaching, which assists, by using a ship docking assist processor, docking of a ship by outputting ship information related to the ship to an assist target device, includes, under control of the ship docking assist processor, acquiring image information which is taken by an imaging device mounted on the ship and includes a docking target and a water surface, the docking target being an object which is a shore at which the ship is docked or an object in the vicinity of the shore and is used as a mark when the ship is docked; calculating at least one relative positional relation which indicates the relation between a ship body of the ship and the docking target, from plural sets of the image information including the docking target and the water surface, which are acquired while the ship body is moved forward in a ship body front-rear direction by a propulsion unit which is provided in the ship body of the ship to generate propulsion force for moving the ship body; storing the at least one relative positional relation in the storage device as the ship information; and outputting the ship information stored in the storage device to the assist target device.

According to this arrangement, the ship docking assisting method of the present teaching assists, by using the ship docking assist processor, the docking of a ship by outputting ship information related to the ship to the assist target device. The ship docking assist processor acquires image information including the docking target and the water surface taken by the imaging device. The imaging device takes an image including the docking target and the water surface. The imaging device is mounted on the ship. The docking target is an object which is a shore at which the ship is docked or an object in the vicinity of the shore, and is used as a mark when the ship is docked at the shore. On this account, the ship docking assist processor is able to acquire the image information of the docking target taken by the imaging device, in the approaching operation. The ship docking assist processor acquires a plurality of sets of image information of both the docking target and the water surface. The sets of the image information are at least two sets of image information of both the docking target and the water surface. Alternatively, the ship docking assist processor may acquire image information of only one of the docking target and the water surface. Alternatively, the ship docking assist processor may acquire image information of none of the docking target and the water surface. Because, while the ship is moving, the shape of the water surface tends to change whereas the shape of the docking target does not change, it is easy to detect the docking target from the plural sets of image information. For this reason, even if the distance between the ship body and the docking target is long, it is possible to accurately sample the information of the docking target from the sets of image information having been taken. The ship docking assist processor then calculates at least one relative positional relation between the ship body and the docking target in distance and direction from plural sets of the image information including the docking target and the water surface, which are acquired by the imaging device while the ship is moved forward in the ship body front-rear direction. The ship body is moved forward in the ship body front-rear direction by the propulsion unit which generates propulsion force for moving the ship body. The propulsion unit is provided in the ship body. The ship docking assist processor stores the at least one relative positional relation in the storage device, as ship information. The ship docking assist processor then assists the docking by outputting the ship information stored in the storage device to the assist target device. Furthermore, in the approaching operation, plural sets of image information which are different in distance can be obtained because the distance between the ship body and the docking target is long. In other words, by using image information taken when the distance is long, it is possible to detect information of the surroundings of the docking target, in addition to the information of the docking target. Meanwhile, in the docking operation, plural sets of image information which are substantially identical in distance can be obtained, because the distance between the ship body and the docking target is short. In other words, by using image information taken when the distance is short, it is possible to further accurately detect the information of the docking target. In summary, in accordance with the approaching operation and the docking operation, the ship docking assist method is able to assist the docking to be accurately done by using the information of the docking target and the information of the surroundings of the docking target, which are detected from plural sets of image information. Furthermore, because the at least one relative positional relation calculated while the ship body is moving is output as the ship information, it is unnecessary to store map information in the storage device of the ship docking assisting apparatus or the assist target device in advance. This map information includes the location of the docking target within a range of movement of the ship body in the approaching operation and the docking operation. It is therefore possible to reduce the region of the storage device of the ship docking assisting apparatus or the assist target device, and to reduce the hardware resource of the ship docking assisting apparatus or the assist target device. The at least one relative positional relation which is output as the ship information can be easily used for assisting the docking of the ship by the assist target device. Because the ship information can be easily used, the ship information can be easily processed in the assist target device. It is therefore possible to reduce the hardware resource by improving the efficiency of the processing of the ship information in the assist target device. As such, the ship docking assist method of the present teaching is able to assist the ship to be accurately docked, while reducing the hardware resource.

(10) According to an aspect of the present teaching, the ship docking assist method of the present teaching preferably includes the following arrangement, in addition to the arrangement (9).

The imaging device is mounted on the ship to be able to take an image of the docking target and the water surface which are located forward of the ship body, while the ship body is moved forward in the ship body front-rear direction by the propulsion unit.

According to this arrangement, the imaging device is arranged to be able to take an image of the docking target and the water surface in front of the ship body in the ship body front-rear direction, while the ship body moves forward in the ship body front-rear direction by the propulsion unit. For example, the imaging device is provided at a front portion of the ship body. On this account, when the ship is moving forward in the approaching operation, it is easy to take an image of the docking target and the water surface. In other words, the ship docking assist processor can easily obtain image information in which an image of the docking target taken by the imaging device is included. The ship docking assist method of the present teaching is therefore able to assist the ship to be further accurately docked.

(11) According to an aspect of the present teaching, the ship docking assist method of the present teaching preferably includes the following arrangement, in addition to the arrangement (9) or (10). In addition to the above, the ship docking assist processor:
displays an image including the docking target and the water surface on a display which is configured to display information and mounted on the ship, based on image information taken by the imaging device; and
obtains information of the docking target input by an operator by using an input device which allows input of information and is mounted on the ship, when the image including the docking target and the water surface is displayed on the display.

According to this arrangement, the ship docking assist processor displays, on the display, an image including the docking target and the water surface, based on image information taken by the imaging device. The display is an apparatus which is mounted on the ship and is configured to display information. Furthermore, the ship docking assist processor acquires information of the docking target set by the operator using the input device, while an image including the docking target and the water surface is displayed on the display. The input device is an apparatus which is mounted on the ship and is configured to input information. This allows the operator of the ship to set the docking target at will. The ship docking assist method of the present teaching is able to assist the ship to be further accurately docked at a shore desired by the operator.

(12) According to an aspect of the present teaching, the ship docking assist method of the present teaching preferably includes the following arrangement, in addition to any one of the arrangements (9) to (11).

The ship docking assist method calculates relative speed of the ship body from a plurality of the at least one relative positional relation, and
stores the relative speed of the ship body relative to the docking target in the storage device, as the ship information.

According to this arrangement, the ship docking assist processor calculates the speed of the ship body relative to the docking target, based on plural relative positional relations. The ship docking assist processor then stores the relative speed of the ship body in the storage device as ship information. The ship docking assist processor is therefore able to further output the relative speed of the ship body as ship information. In this way, the ship docking assist processor is able to use the relative positional relation between the ship body and the docking target and the relative speed of the ship body, for assisting the docking. In this way, the ship docking assist method of the present teaching is therefore able to assist the ship to be further accurately docked.

(13) According to an aspect of the present teaching, the ship docking assist method of the present teaching preferably includes the following arrangement, in addition to any one of the arrangements (9) to (12).

In addition, the ship docking assist processor calculates, from the at least one relative positional relation, (i) a target angle which is an angle between a bow direction which is a forward direction of the ship body and a target direction which is a direction of the docking target relative to the ship body, (ii) an approach angle which is an angle between the bow direction and a docking direction which is a direction of a border line between a shore at which the ship body is docked and the water surface, and (iii) a target distance which is the shortest distance between the ship body and the docking target, and
the ship docking assist processor stores the target angle, the approach angle, and the target distance in the storage device as the ship information.

According to this arrangement, the ship docking assist processor calculates a target angle, an approach angle, and a target distance based on at least one relative positional relation. The target angle is an angle between a bow direction and a target direction. The bow direction is a forward direction of the ship body. The target direction is a direction in which the docking target is located relative to the ship body. The approach angle is an angle formed between a docking direction and the bow direction. The docking direction is a direction of the border line between the shore at which the ship body is docked and the water surface. When the ship is positioned to be parallel to the wharf and then the ship is docked by making contact with or coming very close to the wharf, the docking direction is parallel to the ship body front-rear direction of the ship body when the ship is docked at the shore. The target distance is the shortest distance between the ship body and the docking target. The ship docking assist processor then stores the target angle, the approach angle, and the target distance having been calculated in the storage device, as ship information. In other words, the target angle, the approach angle, and the target distance are output to the assist target device and used for assisting the docking. The target angle, the approach angle, and the target distance which are output as ship information are easily used for assisting the docking of the ship by the assist target device. Because the ship information can be easily used, the ship information can be easily processed in the assist target device. It is therefore possible to further reduce the hardware resource by further improving the efficiency of the processing of the ship information in the assist target device. As such, the ship docking assist method of the present teaching is able to assist the ship to be further accurately docked, while further reducing the hardware resource.

(14) According to an aspect of the present teaching, the ship docking assist method of the present teaching preferably includes the following arrangement, in addition to any one of the arrangements (9) to (13).

The assist target device is a propulsion unit controller which is able to control the propulsion unit, the ship docking assist processor outputs the ship information from the storage device to the propulsion unit controller, and
the propulsion unit controller generates a command signal for controlling the propulsion unit by using the ship information, and controls the propulsion unit by the command signal so that the ship body is automatically moved.

According to this arrangement, the assist target device is a propulsion unit controller which is able to control the propulsion unit. The ship docking assist processor is configured to output ship information from the storage device to the propulsion unit controller. The propulsion unit controller generates a command signal for controlling the propulsion unit, by using output ship information. By using the generated command signal, the propulsion unit controller controls the propulsion unit so that the ship body moves automatically. The propulsion unit is provided in the ship body to generate propulsion force for moving the ship body. The ship docking assisting apparatus is therefore able to assist the approaching operation and the docking operation to be automatically done until the ship is docked. In the propulsion unit controller which is the assist target device, the ship information is easily used for assisting the docking of the ship. Because the ship information can be easily used, the ship information can be easily processed in the propulsion unit controller which is an assist target device. It is therefore possible to reduce the hardware resource by further improving the efficiency of the processing of the ship information in the propulsion unit controller which is an assist target device. On this account, the ship docking assist method of the present teaching is able to assist the ship to be further accurately docked, while further reducing the hardware resource.

(15) According to an aspect of the present teaching, the ship docking assist method of the present teaching preferably includes the following arrangement, in addition to any one of the arrangements (9) to (13).

The assist target device is a propulsion unit controller which is able to control the propulsion unit, the ship docking assist processor outputs the ship information from the storage device to the propulsion unit controller, and
in accordance with an operation by an operator, the propulsion unit controller generates a command signal for controlling the propulsion unit by using the ship information output from the storage device, and controls the propulsion unit by the command signal.

According to this arrangement, the assist target device is a propulsion unit controller which is able to control the propulsion unit. The ship docking assist processor is configured to output ship information from the storage device to the propulsion unit controller. In accordance with an operation by an operator, the propulsion unit controller generates a command signal for controlling the propulsion unit by using the ship information output from the storage device. The propulsion unit controller then controls the propulsion unit by using the command signal. With this, the ship docking assisting apparatus is able to assist the operations by the operator in the approaching operation and docking operation until the ship is docked. In the propulsion unit controller which is the assist target device, the ship information is easily used for assisting the docking of the ship. Because the ship information can be easily used, the ship information can be easily processed in the propulsion unit controller which is an assist target device. It is therefore possible to reduce the hardware resource by further improving the efficiency of the processing of the ship information in the propulsion unit controller which is an assist target device. On this account, the ship docking assist method of the present teaching is able to assist the ship to be further accurately docked, while further reducing the hardware resource.

(16) According to an aspect of the present teaching, the ship docking assist method of the present teaching preferably includes the following arrangement, in addition to any one of the arrangements (9) to (15).

The assist target device is a display which is configured to display information,
the ship docking assist processor outputs the ship information from the storage device to the display, and
the display displays the ship information or information generated based on the ship information.

According to this arrangement, the assist target device is a display. The display displays information. The ship docking assist processor outputs ship information from the storage device to the display. The display displays ship information or information generated based on the ship information. The display displays ship information. In addition, the display displays information generated based on the ship information (e.g., an operating method in the approaching operation and the docking operation). With this, the ship docking assisting apparatus is able to assist the operator of the ship who sees the display to perform operations in consideration of the ship information, in the approaching operation and docking operation until the ship is docked. In the display which is the assist target device, the ship information is easily used for assisting the docking of the ship. Because the ship information can be easily used, the ship information can be easily processed in the display which is the assist target device. It is therefore possible to reduce the hardware resource by further improving the efficiency of the processing of the ship information in the display which is the assist target device. On this account, the ship docking assist method of the present teaching is able to assist the ship to be further accurately docked, while further reducing the hardware resource.

### <Definition of Ship>

In the present teaching, a ship is buoyant and has self navigation capability. The self navigation capability indicates that the ship is able to navigate actively. An example of a ship which does not have self navigation capability is a ship which is pulled or pushed by another ship. A ship having self navigation capability includes a propulsion unit which is provided in a ship body to generate propulsion force for moving the ship body. The ship encompasses a large ship and a small ship. The large ship is a ship of 20 or more tons gross. The large ship is, for example, a tanker. The small ship is a ship of less than 20 tons gross. The small ship is, for example, a jet propulsion boat such as a jet boat and a sport boat. The ship of the present teaching is preferably a small ship.

### <Definitions of Docking, Docking Target, and Shore>

In the present teaching, docking indicates that a ship makes contact with or moves very close to a shore at which the ship is to be docked. In the present teaching, docking may indicate that a ship is docked so that the ship body front-rear direction is parallel to the shore. In this case, for example, the ship may move only forward in the ship body front-rear direction, or may rotate at a location close to the shore. In the present teaching, docking may indicate that a ship moves forward and is docked so that the bow is closer to the shore than the stern is to the shore. In the present teaching, docking may indicate that a ship moves rearward and is docked so that the stern is closer to the wharf than the bow is to the wharf. The forward movement in this case indicates that the ship moves forward in the ship body front-rear direction. The rearward movement in this case indicates that the ship moves rearward in the ship body front-rear direction. In the present teaching, a docking target is an object which is a shore at which the ship is docked or an object in the vicinity of the shore, and is used as a mark when the ship is docked. The shore in the present teaching encompasses all kinds of land in contact with water surfaces on which ships are able to navigate. The shore in the present teaching encompasses sea shore, lake shore, river shore, and pond shore. The shore of the present teaching encompasses a pier and other ships.

### <Definitions of Relative Positional Relation between Ship Body and Docking Target>

In the present teaching, the relative positional relation between a ship body and a docking target indicates the relation in distance and direction between the ship body and the docking target. The relative positional relation between the ship body and the docking target is, for example, represented by two-dimensional or three-dimensional coordinates. Alternatively, the relative positional relation between the ship body and the docking target is, for example, represented by two-dimensional or three-dimensional vectors.

When at least one relative positional relation of the present teaching are plural relative positional relations, these relative positional relations are those of the ship body and the docking target at different times. In the present teaching, a plurality of sets of image information used for calculating at least one relative positional relation are sets of image information taken by an imaging device at different times.

### <Definitions of Ship Information, Information, and Data>

In the present teaching, ship information indicates information related to a ship. The information indicates information through which any knowledge can be obtained, and is represented by data. The data is representation of the information. The data is in a form suitable for being transmitted, interpreted, or processed, and the information can be reconstructed from the data.

### <Definition of Imaging Device>

In the present teaching, an imaging device indicates a device which is able to store, as image information, a still image or a moving image taken by imaging elements which are configured to convert light from an object into image data.

### <Definition of Ship Docking Assist Processor>

In the present teaching, a ship docking assist processor encompasses a microcontroller, a CPU (Central Processing Unit), a GPU (Graphics Processing Unit), a microprocessor, an application specific integrated circuit (ASIC), a programmable logic circuit (PLC), a field programmable gate array (FPGA), and other types of circuits, and is a device which is programmed or configured to execute processes described in the present teaching and the specification.

### <Definition of Storage Device>

In the present teaching, a storage device indicates a device which includes a recording medium such as a RAM (Random Access Memory) and a ROM (Read Only Memory) and is configured to store data. In the present teaching, the storage device encompasses a main storage, an auxiliary storage, a register, and the like.

### <Definition of Assist Target Device>

In the present teaching, an assist target device is a device which is a target of output of ship information. The assist target device encompasses, for example, a propulsion unit controller and a display.

### <Definition of Display>

In the present teaching, a display indicates a device configured to display information. The display includes a display unit configured to display information and a calculation unit configured to calculate the information to be displayed. The display unit of the display is, for example, a liquid crystal display.

### <Definition of Input Device>

In the present teaching, an input device indicates a device by which information is input. The input device encompasses a keyboard, a mouse, and a touch panel.

### <Other Definitions of Terms>

In the present teaching, an end portion of a member indicates a portion constituted by an end and its surroundings of the member.

In the present teaching, a direction along an A direction is not limited to a direction in parallel to the A direction. A direction along the A direction includes a linear line which intersects with the A direction at an angle which falls within the range from -45 degrees to 45 degrees. The same definition applies to other expressions using "along". The other expressions using "along" are, for example, "direction along the A direction", "plural B are lined up along the A direction", and "a single B is provided along the A direction". The direction A does not indicate any specific direction. The direction A may be the horizontal direction or the front-rear direction.

In the present teaching, an expression "members A and B are lined up in an X direction" indicates the following state. When the members A and B are viewed in a direction orthogonal to the X direction, the members A and B are both provided on a linear line which is parallel to the X direction. In the present teaching, an expression "members A and B are provided side by side in an X direction when viewed in a Y direction" indicates the following state. When the members A and B are viewed in the Y direction, the members A and B are both provided on a linear line which is parallel to the X direction. In this regard, when the members A and B are viewed in a Z direction which is different from the Y direction, the member A or B may not be provided on the linear line which is parallel to the X direction. The members A and B may be in contact with each other. The members A and B may not be in contact with each other. A member C may be provided between the members A and B.

In this specification, an expression "a member A is provided forward of a member B" indicates the following state. The member A is provided in front of a plane which passes the front-most end of the member B and is orthogonal to the front-rear direction. In this connection, the members A and B may or may not be lined up in the front-rear direction. The same applies to expressions "a member A is provided rearward of a member B", "a member A is provided above a member B", "a member A is provided below a member B", and "a member A is provided rightward of or leftward of a member B".

In this specification, an expression "a member A is provided in front of a member B" indicates the following state. The members A and B are lined up in the front-rear direction and a part of the member A, the part facing the member B, is provided in front of the member B. According to this definition, when a part of the front surface of the member B, the part facing the member A, is the front-most end of the member B, the member A is provided forward of the member B. According to the definition, when a part of the front surface of the member B, the part facing the member A, is not the front-most end of the member B, the member A may or may not be provided forward of the member B. The same applies to expressions "a member A is provided behind a member B", "a member A is provided directly above a member B", "a member A is provided directly below a member B", and "a member A is provided to the right of or to the left of a member B". The front surface of the member B is a surface which is viewable when the member B is viewed from the front side. Depending on the shape of the member B, the front surface of the member B may be formed of plural surfaces, instead of a single continuous surface.

In the present teaching, terms "including", "comprising", "having", and derivatives thereof are used to encompass not only listed items and equivalents thereof but also additional items. The terms "mounted", "connected", and "coupled" are used in broad sense. To be more specific, the terms encompass not only directly mounting, connection, and coupling but also indirect mounting, connection, and coupling. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art in the technical field to which the present teaching belongs.

Terms defined in typical dictionaries indicate meanings used in related technologies and in the context of the present disclosure. The terms are not interpreted ideally or excessively formally.

In this specification, the term "preferable" is non-exclusive. The term "preferable" means "preferable but not limited to". In this specification, an arrangement which is "preferable" exerts at least the above-described effects of the arrangement (1) above. In this specification, the term "may" is non-exclusive. The term "may" indicate "may but not must". In this specification, an arrangement which is explained by using the term "may" exerts at least the above-described effects of the arrangement (1) above.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching, the arrangements of the above-described different aspects may be variously combined.

Before an embodiment of the present teaching is detailed, it is informed that the present teaching is not limited to the configurations and layout of elements described below and/or shown in drawings. The present teaching may be implemented as another embodiment, or as an embodiment with various changes. Furthermore, the present teaching may be implemented by suitably combining below-described modifications.

### [Advantageous Effects]

The ship docking assisting apparatus and the ship docking assisting method of the present teaching allow a ship to be accurately docked, with reduced hardware resource.

### [Brief Description of Drawings]

FIG. 1 outlines a ship docking assisting apparatus and a ship docking assisting method of an embodiment.
FIG. 2 is a plan view showing an example of a ship on which a ship docking assisting apparatus of a specific example is mounted.
FIG. 3 is a side view of the ship shown in FIG. 2.
FIG. 4 is a side view and a cross section showing the structure of a propulsion unit of the ship shown in FIG. 2.
FIG. 5 is a schematic representation showing the electrical configuration of the ship shown in FIG. 2.
FIG. 6 is a block diagram of the structure of a ship docking assisting apparatus of a specific example.
FIG. 7 is a flowchart of steps of a process performed by a ship docking assist processor and a propulsion unit controller of the ship docking assisting apparatus of the specific example.
FIG. 8 is a flowchart of detailed steps of part of the process performed by the ship docking assist processor of the ship docking assisting apparatus of the specific example.
FIG. 9 shows an example of an image displayed on a display of a ship on which the ship docking assisting apparatus of the specific example is mounted.
FIG. 10 shows the relationship between a target angle, an approach angle, and a target distance of the ship on which the ship docking assisting apparatus of the specific example is mounted.
FIG. 11 shows an example of ship information displayed on the display of the ship on which the ship docking assisting apparatus of the specific example is mounted.

### [Description of Embodiments]

### <Ship Docking Assisting Apparatus and Ship Docking Assisting Method of Embodiment of Present Teaching>

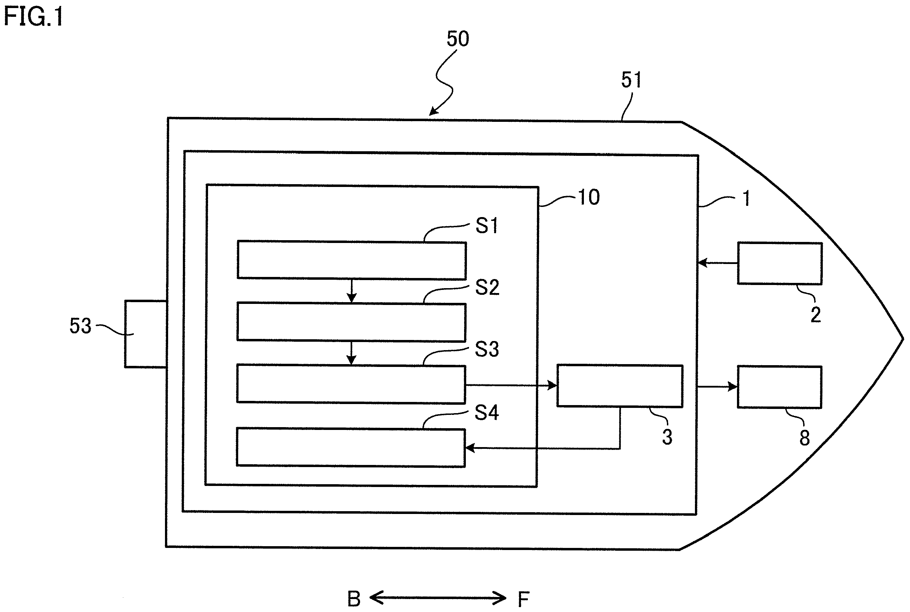

The following will describe a ship docking assisting apparatus and a ship docking assisting method of an embodiment of the present teaching. FIG. 1 is a schematic view of a ship docking assisting apparatus of the embodiment of the present teaching. Arrows F and B in FIG. 1 indicate forward and rearward in a ship body front-rear direction, respectively.

A ship docking assisting apparatus 1 of the present embodiment assists the docking of a ship 50 by outputting ship information related to the ship 50 to an assist target device. As shown in FIG. 1, the ship docking assisting apparatus 1 includes a storage device 3 and a ship docking assist processor 10. A ship docking assisting method of the present embodiment assists, by using the ship docking assist processor 10, the docking of the ship 50 by outputting ship information related to the ship 50 to an assist target device.

An imaging device 2 is mounted on the ship 50. The storage device 3 stores information.

The ship docking assist processor 10 is configured or programmed to execute processes described below.

The ship docking assist processor 10 acquires image information including a docking target and a water surface taken by the imaging device 2 (step S1). The docking target is an object which is a shore at which the ship is docked or an object in the vicinity of the shore, and is used as a mark when the ship 50 is docked at the shore.

The ship docking assist processor 10 calculates at least one relative positional relation between a ship body 51 and the docking target, from a plurality of sets of image information obtained while the ship 50 is moved forward in the ship body front-rear direction by a propulsion unit 53 (step S2). The propulsion unit 53 is provided in the ship body 51 of the ship 50 to generate propulsion force for moving the ship body 51. The sets of the image information are at least two sets of image information of both the docking target and the water surface. Alternatively, the ship docking assist processor 10 may acquire image information of only one of the docking target and the water surface. Alternatively, the ship docking assist processor 10 may acquire image information of none of the docking target and the water surface.

The ship docking assist processor 10 stores the at least one relative positional relation in the storage device 3, as ship information (step S3).

The ship docking assist processor 10 outputs the at least one set of ship information stored in the storage device 3 to an assist target device 8 (step S4).

According to this arrangement, the ship docking assisting apparatus 1 and the ship docking assisting method of the present embodiment exert the following effects.

The ship docking assist processor 10 acquires image information including the docking target and the water surface taken by the imaging device 2 (step S1). On this account, the ship docking assisting apparatus 1 is able to acquire the image information of the docking target taken by the imaging device 2, in the approaching operation.

The ship docking assist processor 10 calculates at least one relative positional relation between the ship body 51 and the docking target, from a plurality of sets of image information including the docking target and the water surface, which are taken by the imaging device 2 while the ship 51 moves forward in the ship body front-rear direction (step S3). The ship docking assist processor 10 acquires a plurality of sets of image information of both (i) the shore at which the ship is docked or the docking target at around the shore and (ii) the water surface. In this regard, because the shape of the water surface tends to change whereas the shape of the docking target does not change while the ship 50 is moving, it is easy to detect the docking target from the plural sets of image information. For this reason, even if the distance between the ship body 51 and the docking target is long, it is possible to sample the information of the docking target by removing the information of the water surface from the sets of image information having been taken. The ship docking assist processor 10 stores the relative positional relation in the storage device 3, as ship information (step S4). The ship docking assist processor 10 then assists the docking by outputting the at least one set of ship information stored in the storage device 3 to the assist target device 8.

Furthermore, in the approaching operation, plural sets of image information which are different in distance can be obtained because the distance between the ship body 51 and the docking target is long. In other words, by using image information taken when the distance is long, it is possible to detect information of the surroundings of the docking target, in addition to the information of the docking target. Meanwhile, in the docking operation, plural sets of image information which are substantially identical in distance can be obtained, because the distance between the ship body 51 and the docking target is short. In other words, by using image information taken when the distance is short, it is possible to further accurately detect the information of the docking target. In summary, in the ship docking assisting apparatus 1 and the ship docking assisting method of the present embodiment, in accordance with the approaching operation and the docking operation, it is possible to assist the docking to be accurately done by using the information of the docking target and the information of the surroundings of the docking target, which are detected from plural sets of image information.

Furthermore, because the at least one relative positional relation calculated while the ship body 51 is moving is output as the ship information, it is unnecessary to store map information in the storage device 3 or a storage device of the assist target device 8 in advance for assisting the docking. This map information includes the location of the docking target within a range of movement of the ship body in the approaching operation and the docking operation. It is therefore possible to reduce the region of the storage device 3 or the storage device in the assist target device 8, and to reduce the hardware resource of the ship docking assisting apparatus 1 or the assist target device 8. The at least one relative positional relation which is output as the ship information can be easily used for assisting the docking of the ship by the assist target device 8. Because the ship information can be easily used, the ship information can be easily processed in the assist target device 8. It is therefore possible to reduce the hardware resource by improving the efficiency of the processing of the ship information in the assist target device 8.

As such, the ship docking assisting apparatus 1 and the ship docking assisting method of the present embodiment are able to assist the ship 50 to be accurately docked, while reducing the hardware resource.

### <Ship Docking Assisting Apparatus 1 and Ship Docking Assisting Method of Specific Example of Embodiment of Present Teaching>

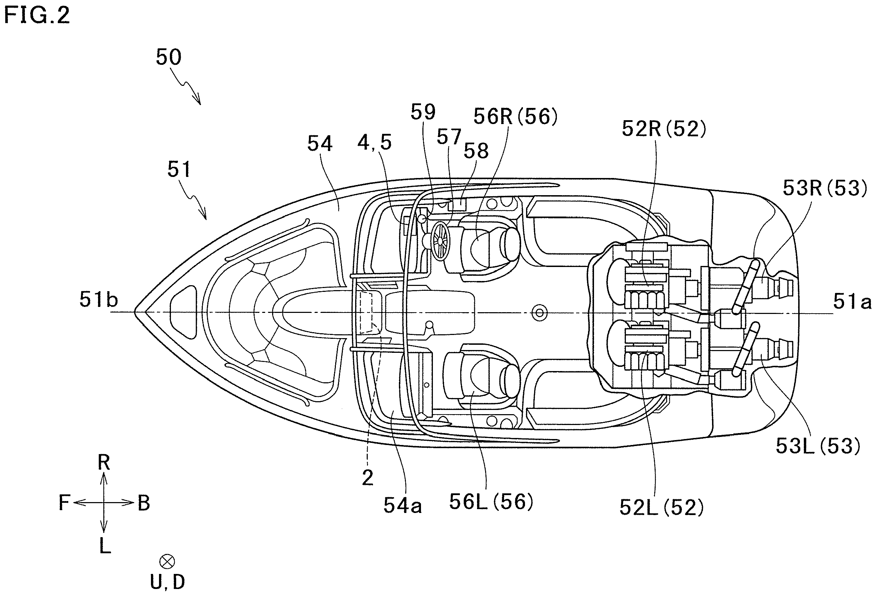

The following will describe a ship docking assisting apparatus 1 and a ship docking assisting method of a specific example of the embodiment of the present teaching, with reference to FIG. 2 to FIG. 9. Basically, the ship docking assisting apparatus 1 of the specific example of the embodiment of the present teaching includes all features of the above-described ship docking assisting apparatus 1 of the embodiment of the present teaching. It is noted that portions identical with those of the ship docking assisting apparatus 1 of the embodiment of the present teaching are not explained again. Basically, the ship docking assist method of the specific example of the embodiment of the present teaching includes all features of the above-described ship docking assist method of the embodiment of the present teaching. It is noted that processes identical with those of the ship docking assist method of the embodiment of the present teaching are not explained again.

<Structure of Ship 50>

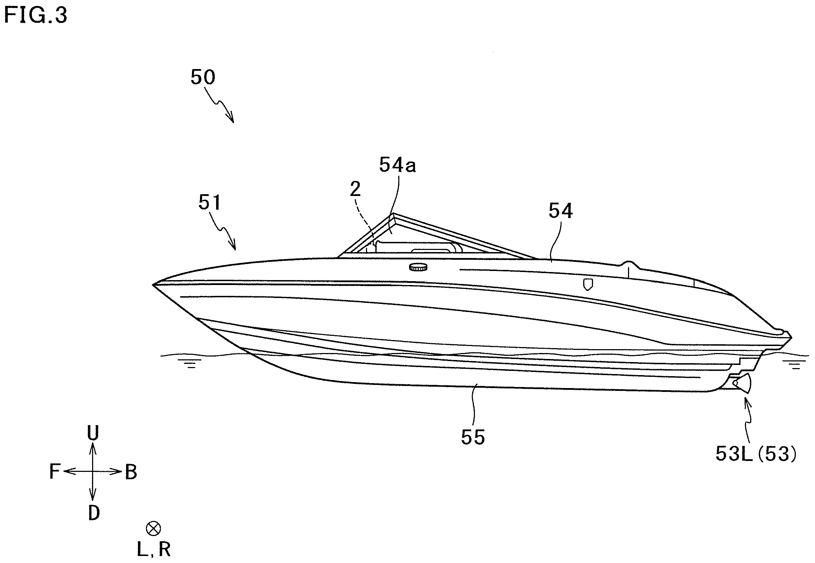

The following will describe an example of a ship on which the ship docking assisting apparatus 1 of the specific example of the present embodiment is mounted, with reference to figures. FIG. 2 is a plan view of the ship 50 of the specific example. In FIG. 2, only parts of the internal structure of the ship 50 are shown. FIG. 3 is a side view of the ship 50 shown in FIG. 2. In the specific example, the ship 50 is a small ship. To be more specific, the ship 50 is, for example, a jet propulsion boat such as a jet boat and a sport boat.

The ship body 51 of the ship 50 includes a stern 51a and a bow 51b. The stern 51a is a rear end portion in the ship body front-rear direction. The bow 51b is a front end portion in the ship body front-rear direction. The ship body front-rear direction is a direction parallel to a center line 51c which passes through the center of the stern 51a and the center of the bow 51b. A ship body up-down direction is a vertical direction. A ship body left-right direction is a direction orthogonal to both the ship body front-rear direction and the ship body up-down direction. An arrow F in each figure indicates forward in the ship body front-rear direction. An arrow B in each figure indicates rearward in the ship body front-rear direction. An arrow L in each figure indicates leftward in the ship body left-right direction. An arrow R in each figure indicates rightward in the ship body left-right direction. An arrow U in each figure indicates upward in the ship body up-down direction. An arrow D in each figure indicates downward in the ship body up-down direction.

The small ship 50 includes a ship body 51, an engine unit 52, and a propulsion unit 53. The ship body 51 includes a deck 54 and a hull 55. The hull 55 is provided below the deck 54 in the ship body up-down direction. A seat section 56 is provided on the deck 54.

The engine unit 52 includes two engines 52L and 52R. To be more specific, the engine unit 52 includes a left engine 52L and a right engine 52R. The left engine 52L and the right engine 52R are provided to be lined up in the ship body left-right direction. The left engine 52L is provided to the left of the right engine 52R in the ship body left-right direction. The right engine 52R is provided to the right of the left engine 52L in the ship body left-right direction. The number of engines in the engine unit is not limited to two. The number of engines may be one, or may be three or more. The engine unit 52 is accommodated in the ship body 51. The engine unit 52 is provided at a rear portion of the ship body 51.

The propulsion unit 53 includes two thrusters 53L and 53R. To be more specific, the propulsion unit 53 includes a left thruster 53L and a right thruster 53R. The left thruster 53L and the right thruster 53R are provided to be lined up in the ship body left-right direction. The left thruster 53L is provided to the left of the right thruster 53R in the ship body left-right direction. The right thruster 53R is provided to the right of the left thruster 53L in the ship body left-right direction. The number of thrusters in the propulsion unit is not limited to two. The number of thrusters may be one, or may be three or more. The propulsion unit 53 is provided at the stern 51a.

The output shaft of the left engine 52L is connected to the left thruster 53L. The output shaft of the right engine 52R is connected to the right thruster 53R. The left thruster 53L is driven by the left engine 52L to generate propulsion force for moving the ship body 51. The right thruster 53R is driven by the right engine 52R to generate propulsion force for moving the ship body 51.

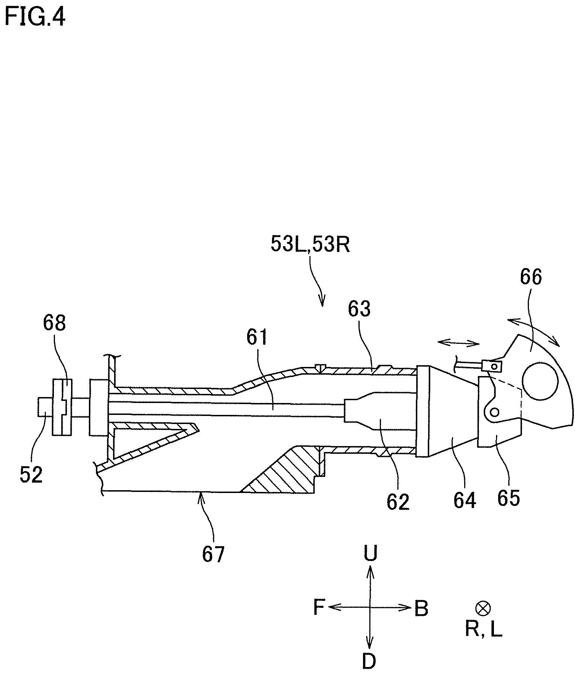

The propulsion unit 53 is a jet propulsion unit which is configured to suck water around the ship body 51 and jets out the water. The propulsion unit 53 will be detailed with reference to FIG. 4. FIG. 4 is a side view showing the structure of each of the two thrusters 53L and 53R of the propulsion unit 53. In FIG. 4, each of the thrusters 53L and 53R is partially shown in cross section. The thrusters 53L and 53R are structurally identical to each other. The thrusters 53L and 53R may not be structurally identical to each other.

As shown in FIG. 4, each of the thrusters 53L and 53R includes an impeller shaft 61, an impeller 62, an impeller housing 63, a nozzle 64, a deflector 65, and a reverse bucket 66. The impeller shaft 61 is provided along the ship body front-rear direction. A front portion in the ship body front-rear direction of the impeller shaft 61 is connected to the output shaft of the engine unit 52 via a coupling 68. A rear portion in the ship body front-rear direction of the impeller shaft 61 is provided in the impeller housing 63. The impeller housing 63 is provided rearward of a water sucking portion 67 in the ship body front-rear direction. The nozzle 64 is provided behind the impeller housing 63 in the ship body front-rear direction.

The impeller 62 is provided at a rear portion in the ship body front-rear direction of the impeller shaft 61. The impeller 62 is provided in the impeller housing 63. The impeller 62 rotates together with the impeller shaft 61. As a result, water is sucked through the water sucking portion 67. The impeller 62 jets out the sucked water rearward in the ship body front-rear direction, through the nozzle 64.

The deflector 65 is provided behind the nozzle 64 in the ship body front-rear direction. The deflector 65 is arranged so that the orientation in the ship body left-right direction of the deflector 65 is changeable by an unillustrated actuator. The deflector 65 is arranged to jet out the water supplied from the nozzle 64, in the orientation in the left-right direction. In other words, the deflector 65 is able to change the direction in which the water is jetted out from the nozzle 64. As the orientation in the ship body left-right direction of the deflector 65 is changed, the traveling direction of the ship 50 is changed in the ship body left-right direction. The orientation in the left-right direction of the deflector 65 is changed in accordance with a steering angle of a steering device 57 and a joy stick 59 which will be described below.

The reverse bucket 66 is provided behind the deflector 65 in the ship body front-rear direction. The reverse bucket 66 is switchable between an advance position and a retreat position as the reverse bucket 66 is moved in a direction indicated by an arrow shown in FIG. 4 by an unillustrated actuator. At the advance position, the reverse bucket 66 jets out the water from the nozzle 64 and the deflector 65 rearward in the ship body front-rear direction. The ship 50 therefore moves forward when the reverse bucket 66 is at the advance position. At the retreat position, the reverse bucket 66 jets out the water from the nozzle 64 and the deflector 65 forward in the ship body front-rear direction. The ship 50 therefore moves rearward when the reverse bucket 66 is at the retreat position. The position of the reverse bucket 66 shown in FIG. 4 is the advance position.

As shown in FIG. 2, the seat section 56 includes two seats 56R and 56L. The two seats 56R and 56L are provided to be lined up in the ship body left-right direction. The seat 56R is a driver seat. The seat 56L is a passenger seat 56L. The passenger seat 56L is provided to the left of the driver seat 56R in the ship body left-right direction. The driver seat 56R is provided to the right of the passenger seat 56L in the ship body left-right direction.

As shown in FIG. 2 and FIG. 3, the ship body 51 has a screen 54a which is provided at a front portion. The screen 54a is provided in front of the seat section 56 in the ship body front-rear direction. The screen 54a is made of transparent resin. The screen 54a suppresses the intrusion of wind and water into the seat section 56.

The imaging device 2 is provided behind the screen 54a in the ship body 51. The imaging device 2 is provided at a front portion of the ship body 51. The imaging device 2 is arranged to be able to take an image of a docking target and a water surface in front of the ship body 51 in the ship body front-rear direction, while the ship body 51 is moved forward in the ship body front-rear direction by the propulsion unit 53. The imaging device 2 is a stereo camera which is fixed to the ship body 51. In other words, the photographing direction of the imaging device 2 is fixed relative to the ship body 51.

The ship 50 includes the steering device 57, a remote controller unit 58, the joy stick 59, a display 4, and an input device 5. The steering device 57, the remote controller unit 58, the joy stick 59, the display 4, and the input device 5 are provided in front of the driver seat 56R. The steering device 57, the remote controller unit 58, the joy stick 59, and the input device 5 are provided to be operable by a driver seated on the driver seat 56R. The display 4 is provided to be viewable by the driver seated on the driver seat 56R.

The steering device 57 is provided at the driver seat 56R. The steering device 57 includes a steering wheel 57a. The steering device 57 is operated to steer the ship body 51.

The remote controller unit 58 is operated to switch between advance, neutral, and retreat. In addition to this, the remote controller unit 58 is operated to adjust the output of the engine unit 52 when switching to the advance or retreat is performed. The remote controller unit 58 is lever-shaped. The remote controller unit 58 includes a left throttle lever 58L and a right throttle lever 58R. As the left throttle lever 58L is operated, the left engine 52L and the left thruster 53L are switched to advance, neutral, or retreat. Furthermore, as the left throttle lever 58L is operated, the output of the left engine 52L when switched to advance or retreat is adjusted. As the right throttle lever 58R is operated, the right engine 52R and the right thruster 53R are switched to advance, neutral, or retreat. Furthermore, as the right throttle lever 58R is operated, the output of the right engine 52R when switched to advance or retreat is adjusted. By using the remote controller unit 58, the relative speed and the traveling direction in the ship body front-rear direction of the small ship 50 are changed.

The joy stick 59 is operated, for example, to move the ship body 51 in the ship body front-rear direction and the ship body left-right direction when the ship is moving at a low speed. The joy stick 59 is a stick-shaped member. The joy stick 59 is arranged to be tiltable in the ship body front-rear direction and the ship body left-right direction. As the tilting direction of the joy stick 59 is changed, the orientation of the deflector 65 is changed and the engine unit 52 is switched between the advance and the retreat. The tilt angle of the joy stick 59 is adjustable. As the tilt angle of the joy stick 59 is changed, the output of the engine unit 52 is adjusted. The joy stick 59 changes the traveling direction of the ship body 51 in the ship body front-rear direction and the ship body left-right direction, with the result that the small ship 50 moves or turns.

The display 4 incudes a display device M which is configured to display a still image or a moving image based on an image signal output from a later-described controller 7. The display device M is, for example, a liquid crystal display. The display 4 is mounted on the ship 50.

The input device 5 is a device which outputs information to the later-described controller 7. The input device 5 is, for example, a touch panel. The input device 5 is combined with the display device M of the display 4 to form a touch panel. Through the input device 5, information is input in such a way that an object on the screen of the display device M is touched by a finger, a pen, or the like. The input device 5 is mounted on the ship 50.

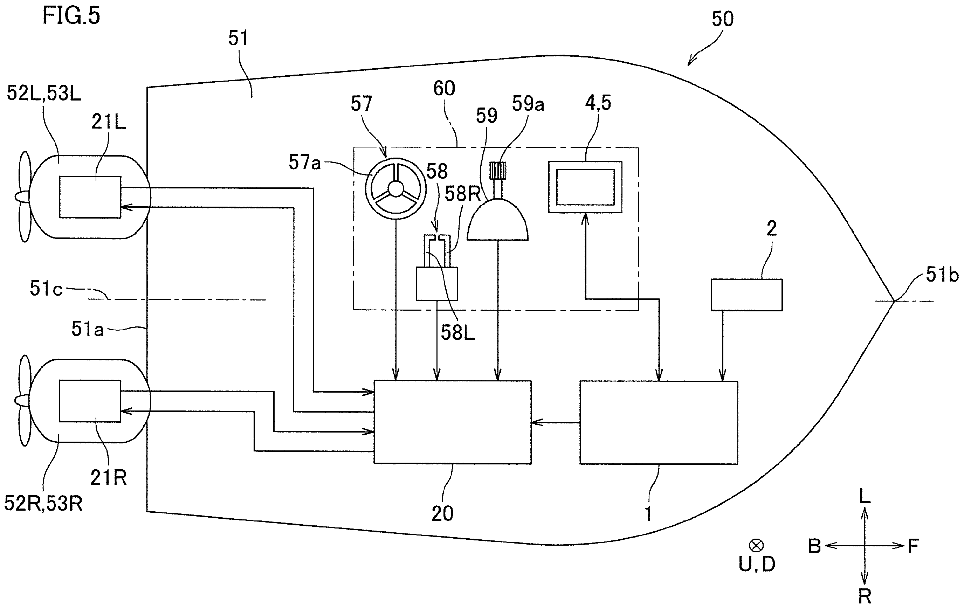

The electrical configuration of the ship 50 will be described with reference to FIG. 5. FIG. 5 is a schematic representation of the electrical configuration of the ship. The ship 50 includes the ship docking assisting apparatus 1 and a propulsion unit controller 20. The ship docking assisting apparatus 1 is connected to the display 4 and the input device 5. The propulsion unit controller 20 is connected to the steering device 57, the remote controller unit 58, the joy stick 59, and engine control units 21L and 21R. Each of the engine control units 21L and 21R is constituted by an electronic control unit which is configured to control the output of the engine unit 52, the orientation of the deflector 65 in the ship body left-right direction, and the position of the reverse bucket 66. The propulsion unit controller 20 is constituted by an electronic control unit including a microcomputer. The propulsion unit controller 20 is an assist target device to which ship information related to the ship is output, and is connected to the ship docking assisting apparatus 1. The propulsion unit controller 20 has a function of controlling propulsion force and a function of controlling a steering angle. The ship docking assist processor 10 of the ship docking assisting apparatus 1 has a function of assisting the docking of the ship 50. The ship docking assist processor 10 and the storage device 3, which are parts of the ship docking assisting apparatus 1, and the propulsion unit controller 20 may be individual electronic control units, or may be constituted by a common electronic control unit.

In accordance with an operation by an operator, the steering device 57 outputs a steering signal which indicates the steering angle of the steering wheel 57a. The steering signal is input to the propulsion unit controller 20. The propulsion unit controller 20 calculates a target steering angle based on the steering signal. The data representing the target steering angle is output from the propulsion unit controller 20 to the engine control units 21L and 21R. The engine control units 21L and 21R change the orientation of the deflector 65 based on the data representing the target steering angle. As a result, the traveling direction of the small ship 50 is changed in the ship body left-right direction.

The remote controller unit 58 outputs an operation signal indicating the degree of movement and the direction of movement of each of the left throttle lever 58L and the right throttle lever 58R, in accordance with the degree of movement and the direction of movement of each of the left throttle lever 58L and the right throttle lever 58R. The operation signal is input to the propulsion unit controller 20. The propulsion unit controller 20 calculates a target throttle opening degree, a target shift position, and a target trim angle, based on the operation signal. The target throttle opening degree is a target of the throttle opening degree of the engines 52R and 52L. The target shift position is a shift position of any one of advance, neutral, and retreat, and is a shift position which is a target. The target trim angle is a target value of a trim angle which indicates the inclination in the ship body front-rear direction of the ship body 51 relative to the water surface. The data representing the target throttle opening degree, the target shift position, and the target trim angle is output from the propulsion unit controller 20 to the engine control units 21L and 21R. The engine control units 21L and 21R control the rotation speeds of the engines 52R and 52L based on the target throttle opening degree and the target trim angle. As a result, the relative speed of the small ship 50 is controlled. The engine control units 21L and 21R switch the position of the reverse bucket 66 based on the target shift position. As a result, the small ship 50 is switched between the advance, the neutral, and the retreat in the ship body front-rear direction.

The joy stick 59 outputs a joy stick operation signal indicating the direction of movement of the joy stick 59 in accordance with the direction of movement of the joy stick 59. The joy stick operation signal is input from the joy stick 59 to the propulsion unit controller 20. The propulsion unit controller 20 calculates the target steering angle based on the joy stick operation signal. The data representing the target steering angle is output from the propulsion unit controller 20 to the engine control units 21L and 21R. The engine control units 21L and 21R change the orientation of the deflector 65 based on the data representing the target steering angle. As a result, the traveling direction of the small ship 50 is changed in the ship body left-right direction. The propulsion unit controller 20 calculates the target throttle opening degree, the target shift position, and the target trim angle, based on the joy stick operation signal. The data representing the target throttle opening degree, the target shift position, and the target trim angle is output from the propulsion unit controller 20 to the engine control units 21L and 21R. The engine control units 21L and 21R control the rotation speeds of the engines 52R and 52L based on the target throttle opening degree and the target trim angle. As a result, the relative speed of the small ship 50 is controlled and the switching of the small ship 50 between the advance, the neutral, and the retreat in the ship body front-rear direction is controlled. In this way, the small ship 50 moves in the ship body front-rear direction and the ship body left-right direction in accordance with the operation of the joy stick 59.

### <Structure of Ship Docking Assisting Apparatus 1>

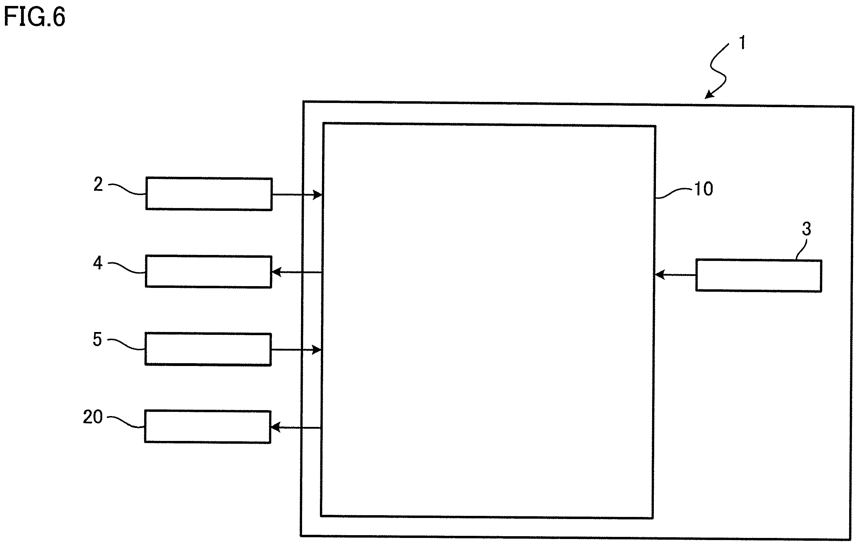

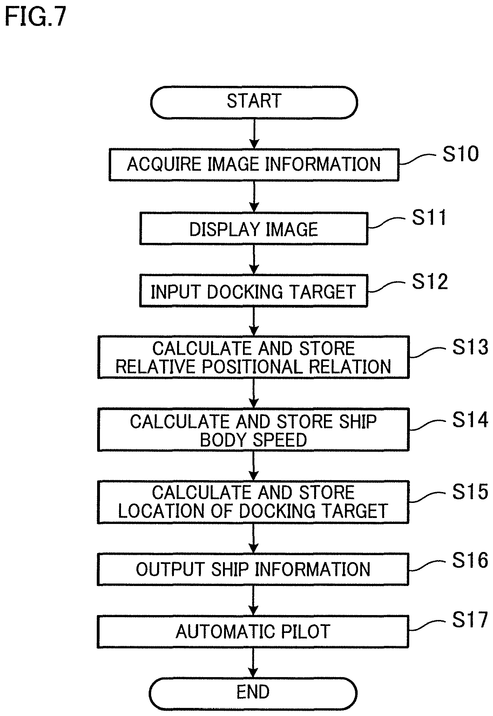

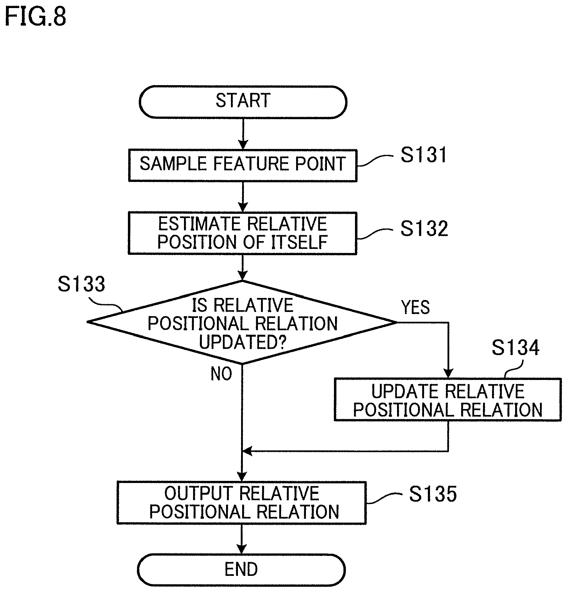

The structure of the ship docking assisting apparatus 1 will be detailed with reference to FIG. 6 to FIG. 8. FIG. 6 is a block diagram of the structure of the ship docking assisting apparatus 1. FIG. 7 is a flowchart of steps of a process performed by the ship docking assist processor 10 of the ship docking assisting apparatus 1 and steps of a process performed by the propulsion unit controller 20. In other words, FIG. 7 is a flowchart of steps of a process performed by the ship docking assist processor 10 and steps of a process performed by the propulsion unit controller 20 in the ship docking assist method. FIG. 8 is a flowchart of detailed steps of part of the process performed by the ship docking assist processor 10 of the ship docking assisting apparatus 1. In other words, FIG. 8 is a flowchart of detailed steps of part of the process performed by the ship docking assist processor 10 in the ship docking assist method.

The ship docking assisting apparatus 1 includes the storage device 3 and the ship docking assist processor 10. The ship docking assisting apparatus 1 is connected to the imaging device 2, the display 4, the input device 5, and the propulsion unit controller 20.

The imaging device 2 is mounted on the ship 50 to be able to take an image of a docking target and a water surface forward of the ship body 51 of the ship 50 in the ship body front-rear direction. The imaging device 2 may take an image of both the docking target and the water surface. The imaging device 2 may take an image of only one of the docking target or the water surface. The imaging device 2 may not take an image of the docking target and the water surface. The imaging device 2 is provided at a front portion of the ship body 51. The imaging device 2 includes a stereo camera in which a plurality of (typically two) monocular cameras are aligned in one housing. The stereo camera reproduces binocular parallax based on slightly different angles. By means of triangulation by a plurality of cameras, the stereo camera recognizes the distance from an object and the shape of an object in three dimensions. In other words, the stereo camera is an imaging device which is able to add depth information to the image information by simultaneously taking images of an object in different directions. The imaging device 2 is connected to the ship docking assist processor 10. The imaging device 2 may be connected to the storage device 3.

The storage device 3 stores data. The storage device 3 is, for example, a RAM (Random Access Memory). The RAM temporarily stores data when the ship docking assist processor 10 executes a program. The storage device 3 stores a program executed by the ship docking assist processor 10.

The ship docking assist processor 10 is configured to execute a series of below-described processes by reading a program stored in the storage device 3. When the ship docking assist processor 10 is a programmable processor, the ship docking assist processor 10 may be programmed to execute the series of processes below.

As shown in FIG. 7, the ship docking assist processor 10 acquires image information including the docking target and the water surface taken by the imaging device 2 (step S10). The docking target is an object which is a shore at which the ship is docked or an object in the vicinity of the shore. The ship docking assist processor 10 may acquire image information including the docking target and the water surface taken by the imaging device 2. The ship docking assist processor 10 may acquire image information including an image of only one of the docking target and the water surface taken by the imaging device 2. The ship docking assist processor 10 may acquire image information not including the docking target and the water surface taken by the imaging device 2.

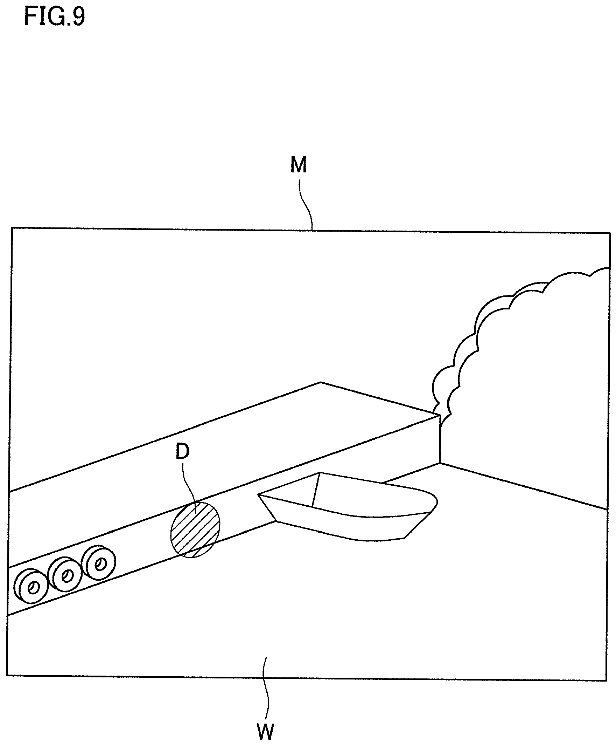

The ship docking assist processor 10 displays, on the display device M of the display 4, an image including the docking target D and the water surface W taken by the imaging device 2 (step S11). An example of the image displayed on the display device M is shown in FIG. 9. As shown in FIG. 9, the display device M displays the docking target D and the water surface W which are located forward of the ship body 51. FIG. 9 shows a case where the docking target D is a shore at which the ship is docked.

The ship docking assist processor 10 displays, on the display device M of the display 4, an image including the docking target and the water surface, based on image information taken by the imaging device 2. The ship docking assist processor 10 acquires information of the docking target specified by the operator using the input device 5, while the image is displayed on the display device M (step S12). For example, as shown in FIG. 9, the docking target D forward of the ship body 51 and displayed on the display device M is specified by using the input device 5. When the docking target D is the shore at which the ship is docked, the docking target D specified by the input device 5 may be a rough position of the shore at which the ship 50 is docked. The docking target D may be a wharf which extends along the ship body front-rear direction of the ship 50 or a wharf which extends in a direction orthogonal to the ship body front-rear direction of the ship 50. When the docking target D is an object in the vicinity of the shore at which the docking target D is docked, the docking target D specified by the input device 5 is, for example, a bollard at the wharf. The ship docking assist processor 10 may determine whether a space of the docking target D specified by the operator using the input device 5 is a space where docking is possible. Whether docking is possible at the space is determined in comparison with the size of the ship 50. When the space of the docking target D is smaller than the size of the ship body 51, the docking target D may not be specifiable by the input device 5 or a message that the space cannot be specified as the docking target D may be displayed on the display 4.

The ship docking assist processor 10 calculates at least one relative positional relation between the ship body 51 and the docking target, from a plurality of sets of image information obtained while the ship 50 moves forward in the ship body front-rear direction (step S13). The sets of the image information are at least two sets of image information of both the docking target and the water surface. The relative positional relation is the three-dimensional relative positional relation between the ship body 51 and the docking target. The ship docking assist processor 10 then stores the calculated at least one relative positional relation between the ship body 51 and the docking target in the storage device 3, as ship information (step S13). Hereinafter, the relative positional relation between the ship body 51 and the docking target may be simply referred to as relative positional relation.

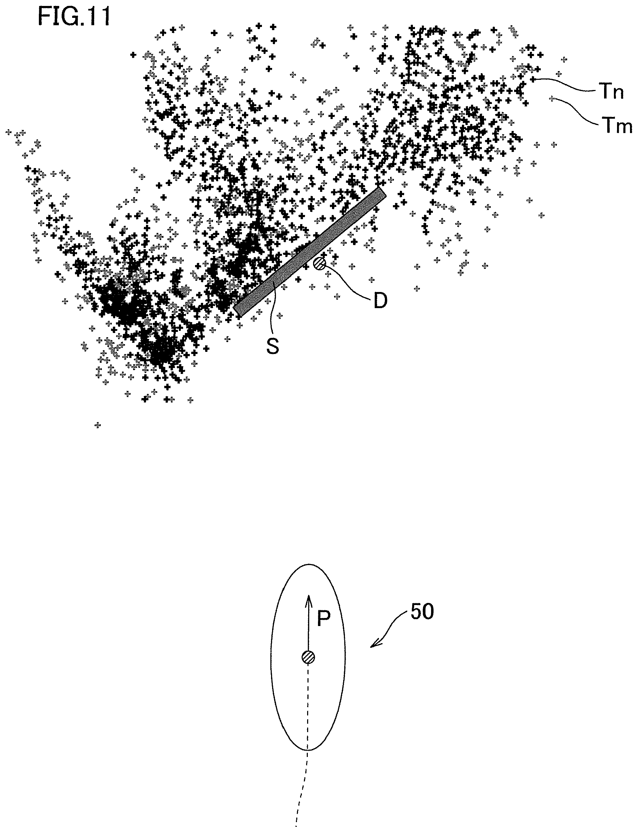

How the step S13 is specifically performed will be described with reference to FIG. 8. As shown in FIG. 8, the ship docking assist processor 10 samples a feature point of the docking target, which is acquired from plural sets of image information (step S131). The feature point is, for example, a point where the brightness significantly varies. To be more specific, for example, a point where the difference in brightness between two neighboring pixels is equal to or larger than a predetermined value is a feature point. The ship docking assist processor 10 samples a feature point of a border line S of the water surface W from sets of image information including the docking target and the water surface. Then, from the sampled feature point of the border line S of the water surface W, a feature point of the docking target D in the vicinity of the border line S of the water surface W is sampled. FIG. 11 shows a specific example of feature points obtained from plural sets of image information by the ship docking assist processor 10. In FIG. 11, feature points obtained at the current timing Tn are indicated by black marks. As ship information, the storage device 3 stores past relative positional relation which is feature points of the docking target sampled at a timing Tm which is before the current timing Tn. In FIG. 11, feature points around the docking target are also sampled in the same manner as the feature points of the docking target. The feature points around the docking target may be or may not be sampled. In FIG. 11, feature points obtained at the past timing Tm are indicated by gray marks. In FIG. 11, the bow direction of the ship body 51 is indicated by an arrow P. The bow direction P is a current forward direction of the ship body. Subsequently, the ship docking assist processor 10 associates the sampled feature points with each other with reference to the past relative positional relation stored in the storage device 3 as ship information, and sets the associated feature points as associated points. Based on the associated points, the position of the ship body 51 relative to the docking target D is estimated (step S132). FIG. 11 shows a specific example of the relative position of the ship body 51 estimated by the ship docking assist processor 10. In FIG. 11, the relative position is two-dimensional relative position of the ship body 51 estimated at the timing Tn. In FIG. 11, the two-dimensional relative position of the ship body 51 estimated at the timing Tm before the timing Tn is shown by a dotted line. The past timing Tm may be a particular single time point or plural time points. The ship docking assist processor 10 then determines whether to update the past relative positional relation between the ship body 51 and the docking target stored in the storage device 3 (step S133). When one of the following update conditions is satisfied, it is determined that the past relative positional relation between the ship body 51 and the docking target stored in the storage device 3 will be updated. An update condition is, for example, a condition in which a predetermined ratio or more of sampled feature points do not have associated feature points in the past relative positional relation. Another update condition is, for example, a condition in which the difference between the estimated relative position of the ship body 51 and the distance of the relative position of the ship body 51 stored in the past relative positional relation becomes equal to or more than a predetermined value. When the ship docking assist processor 10 determines that the past relative positional relation between the ship body 51 and the docking target stored in the storage device 3 will be updated (step S133: YES), the past relative positional relation stored in the storage device 3 is updated by storing the relative positions of the ship body 51 and the docking target estimated based on the sampled feature points in the storage device 3 (step S134), and then the process proceeds to the step S135. When the ship docking assist processor 10 determines that the past relative positional relation between the ship body 51 and the docking target stored in the storage device 3 will not be updated (step S133: NO), the process proceeds to the step S135. In the step S135, the ship docking assist processor 10 outputs the estimated relative positions of the ship body 51 and the docking target as the relative positional relation between the ship body 51 and the docking target, and stores the relative positional relation in the storage device 3 as ship information. The ship docking assist processor 10 executes the above-described steps S131 to S135 at predetermined time intervals.

Now, FIG. 7 is explained again. The ship docking assist processor 10 calculates the speed of the ship body 51 relative to the docking target D, based on plural relative positional relations (step S14). Hereinafter, the speed of the ship body 51 relative to the docking target D may be simply referred to as relative speed of the ship body 51. The relative positional relations are relative positional relations obtained at different timings. The ship docking assist processor 10 calculates the moving distance of the ship body 51 based on the relative positional relations obtained at different timings. The ship docking assist processor 10 calculates the relative speed of the ship body 51 based on the moving distance of the ship body 51 and intervals between the timings at which the relative positional relations were obtained. The ship docking assist processor 10 stores the calculated relative speed of the ship body 51 in the storage device 3 as ship information (step S14).

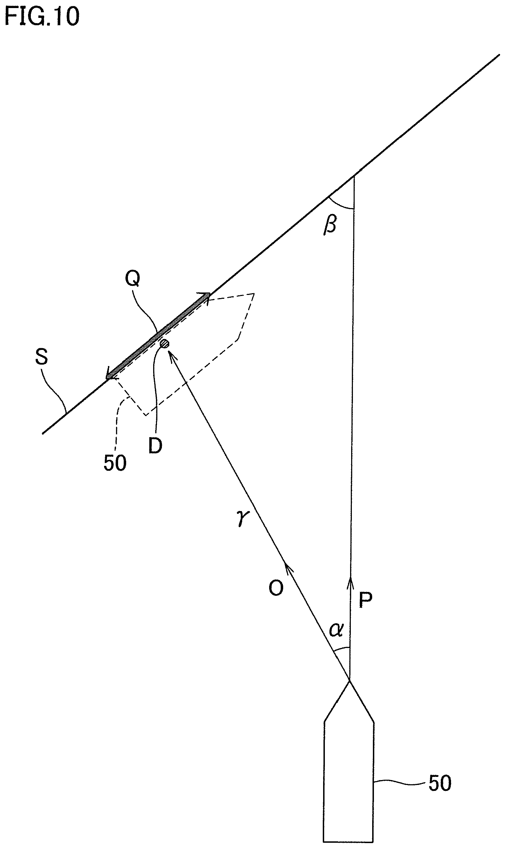

The ship docking assist processor 10 calculates a target angle, an approach angle, and a target distance based on the obtained at least one relative positional relation (step S15). The relationship between a target angle, an approach angle, and a target distance is shown in FIG. 10. As shown in FIG. 10, a target angle α is an angle between a bow direction P and a target direction O. The target direction O is a direction in which the docking target D is located relative to the ship body 51. The approach angle β is an angle formed between a docking direction Q and the bow direction P. The docking direction Q is a direction of the border line S between the shore at which the ship body 51 is docked and the water surface. The docking direction Q is parallel to the ship body front-rear direction of the ship body 51 when the ship is docked at the shore. In FIG. 10, the ship body 51 being docked at the shore is indicated by dotted lines. The target distance γ is the shortest distance between the ship body 51 and the docking target D. To be more specific, the ship docking assist processor 10 calculates a target angle, an approach angle, and a target distance based on the obtained at least one relative positional relation between the ship body 51 and the docking target. The ship docking assist processor 10 then stores the target angle, the approach angle, and the target distance having been calculated in the storage device 3, as ship information (step S15).

The ship docking assist processor 10 outputs at least one set of ship information stored in the storage device 3 to the propulsion unit controller 20 (step S16). In this specific example, the propulsion unit controller 20 performs automatic pilot using the output ship information (step S17). To be more specific, by using the output ship information, the propulsion unit controller 20 generates a command signal for controlling the propulsion unit 53 (step S17). By using the generated command signal, the propulsion unit controller 20 controls the propulsion unit 53 so that the ship body 51 moves automatically (step S17). In this way, the ship docking assisting apparatus 1 is able to assist the docking of the ship 50. To be more specific, the propulsion unit controller 20 calculates a target steering angle based on the target angle α, the approach angle β, and the like, which are sets of ship information. Data representing the target steering angle is output from the propulsion unit controller 20 to the engine control units 21L and 21R, as the command signal for controlling the propulsion unit 53. The engine control units 21L and 21R automatically change the orientation of the deflector 65 based on the data representing the target steering angle. As a result, the traveling direction in the ship body left-right direction of the small ship 50 is automatically changed. In addition to the above, the propulsion unit controller 20 calculates a target throttle opening degree, a target shift position (advance, neutral, or retreat), and a target trim angle, based on the target distance γ, the relative speed of the ship 50, etc., which are sets of ship information. The data representing the target throttle opening degree, the target shift position, and the target trim angle is output from the propulsion unit controller 20 to the engine control units 21L and 21R, as the command signal for controlling the propulsion unit 53. The engine control units 21L and 21R automatically control the rotation speeds of the engines 52R and 52L based on the target throttle opening degree and the target trim angle. As a result, the relative speed of the small ship 50 is automatically controlled and the switching of the small ship 50 between the advance, the neutral, and the retreat in the ship body front-rear direction is automatically controlled.

According to this arrangement, the ship docking assisting apparatus 1 and the ship docking assisting method of the specific example exert the following effects, in addition to the effects of the ship docking assisting apparatus 1 and the ship docking assisting method of the present embodiment.

The imaging device 2 is provided at a front portion of the ship body 51. Furthermore, the imaging device 2 is arranged to be able to take an image of a docking target D and a water surface W in front of the ship body 51 in the ship body front-rear direction, while the ship body 51 moves forward in the ship body front-rear direction by the propulsion unit 53. On this account, when the ship 50 is moving forward in the approaching operation, it is easy to take an image of the docking target D and the water surface W In other words, the ship docking assisting apparatus 1 can easily obtain image information in which an image of the docking target D taken by the imaging device 2 is included. The ship docking assisting apparatus 1 and the ship docking assisting method of the specific example are able to assist the ship 50 to be further accurately docked, while reducing the hardware resource. When, for example, in the docking operation of the ship 50, the ship body 51 is provided so that the ship body front-rear direction is along the wharf, the ship docking assist processor 10 may not be able to obtain image information including an image of the docking target D from the imaging device 2 which is configured to take an image in front of the ship body 51 in the ship body front-rear direction. Even in such a case, in the approaching operation, the ship docking assisting apparatus 1 and the ship docking assisting method store the relative positional relation between the ship body 51 and the docking target D in advance in the storage device 3 as ship information. On this account, the ship docking assist processor 10 is able to perform automatic pilot by using the output ship information, even in the case above.

The ship docking assist processor 10 displays, on the display 4, an image including the docking target D and the water surface W, based on image information taken by the imaging device 2. The display 4 is a device configured to display information. The ship docking assist processor 10 acquires information of the docking target D set by using the input device 5, while an image including the docking target D and the water surface W is displayed on the display device M of the display 4. The input device 5 is a device by which information is input. This allows the operator of the ship 50 to set the docking target D at will. The ship docking assisting apparatus 1 and the ship docking assisting method of the specific example are able to assist the ship 50 to be further accurately docked at a shore desired by the operator, while reducing the hardware resource.

The ship docking assist processor 10 calculates the speed of the ship body 51 relative to the docking target D, based on plural relative positional relations. The ship docking assist processor 10 stores the relative speed of the ship body 51 in the storage device 3 as ship information. The ship docking assist processor 10 is therefore able to further output the relative speed of the ship body 51 as ship information. In this way, the ship docking assisting apparatus 1 and the ship docking assisting method are able to use the relative positional relation between the ship body 51 and the docking target D and the relative speed of the ship body 51, for assisting the docking. The ship docking assisting apparatus 1 and the ship docking assisting method of the specific example are therefore able to assist the ship 50 to be further accurately docked, while reducing the hardware resource.

The ship docking assist processor 10 calculates a target angle α, an approach angle β, and a target distance γ based on at least one relative positional relation. The target angle α is an angle between a bow direction P and a target direction O. The bow direction P is a forward direction of the ship body 51. The target direction O is a direction in which the docking target D is located relative to the ship body 51. The approach angle β is an angle formed between a docking direction Q and the bow direction P. The docking direction Q is a direction of the border line between the shore at which the ship body 51 is docked and the water surface. The target distance γ is the shortest distance between the ship body 51 and the docking target D. The ship docking assist processor 10 then stores the target angle α, the approach angle β, and the target distance γ having been calculated in the storage device 3, as ship information. In other words, the target angle α, the approach angle β, and the target distance γ are output to the assist target device 8 and used for assisting the docking. The target angle α, the approach angle β, and the target distance γ which are output as ship information are easily used for assisting the docking of the ship 50 by the propulsion unit controller 20 which is an assist target device. Because the ship information can be easily used, the ship information can be easily processed in the propulsion unit controller 20 which is an assist target device. It is therefore possible to reduce the hardware resource by further improving the efficiency of the processing of the ship information in the propulsion unit controller 20 which is an assist target device. The ship docking assisting apparatus 1 and the ship docking assisting method of the specific example are able to assist the ship 50 to be further accurately docked, while further reducing the hardware resource.

The assist target device is the propulsion unit controller 20 which is able to control the propulsion unit 53. The ship docking assist processor 10 is configured to output ship information from the storage device 3 to the propulsion unit controller 20. The propulsion unit controller 20 generates a command signal for controlling the propulsion unit 53, by using the ship information output from the storage device 3. The propulsion unit controller 20 controls the propulsion unit 53 by the command signal. The propulsion unit 53 is provided in the ship body 51 to generate propulsion force for moving the ship body 51. The ship docking assisting apparatus 1 and the ship docking assisting method are therefore able to assist the approaching operation and the docking operation to be automatically done until the ship 50 is docked. In the propulsion unit controller 20 which is the assist target device, the ship information is easily used for assisting the docking of the ship 50. Because the ship information can be easily used, the ship information can be easily processed in the propulsion unit controller 20 which is an assist target device. It is therefore possible to reduce the hardware resource by further improving the efficiency of the processing of the ship information in the propulsion unit controller 20 which is an assist target device. The ship docking assisting apparatus 1 and the ship docking assisting method of the specific example are therefore able to assist the ship 50 to be further accurately docked, while further reducing the hardware resource.

<Modifications>

The present teaching is not limited to the above-described embodiment and its specific example, and various changes can be made within the scope of the claims. The following describes modifications of the embodiment of the present teaching. Components having the same structure as those described above will be given the same reference numerals, and the description thereof will be omitted, if appropriate. The embodiment and the specific example of the embodiment described above and the below-described modifications may be used in combination as needed.

In the ship docking assisting apparatus 1 and the ship docking assisting method of the specific example of the embodiment, the ship 50 is a jet propulsion boat. Alternatively, in the ship docking assisting apparatus and the ship docking assisting method of the present teaching, the ship may be a small ship of another type. For example, the ship may be a small ship having an outboard engine including a propeller driven by an engine. In other words, the propulsion unit is not limited to a jet propulsion unit, and may be another propulsion unit such as an outboard engine. In addition to the above, in regard to the ship docking assisting apparatus and the ship docking assisting method of the present teaching, the ship may be a large ship.

In the ship docking assisting apparatus 1 and the ship docking assisting method of the specific example of the embodiment, the imaging device 2 is a stereo camera fixed to the ship body 51. Alternatively, in the imaging device docking assisting apparatus and the ship docking assisting method of the present teaching, the imaging device may be constituted by a stereo camera and a movable device which allows the stereo camera to be movable. In other words, the photographing direction of the imaging device with respect to the ship body may be changeable. The movable device includes, for example, a rotating base which allows the stereo camera to rotate at least in the ship body left-right direction or the ship body up-down direction and a driving device configured to drive the rotating base. The movable device includes, for example, a sliding base which allows the stereo camera to slide at least in the ship body left-right direction or the ship body up-down direction and a driving device configured to drive the sliding base. The movable device includes, for example, a rotating base which allows the stereo camera to slide at least in the ship body left-right direction or the ship body up-down direction, a sliding base which allows the stereo camera to slide at least in the ship body left-right direction or the ship body up-down direction, and a driving device configured to drive the rotating base and the sliding base. When the imaging device includes the movable device, in the approaching operation, the imaging device takes an image of a docking target and a water surface forward of the ship body in the ship body front-rear direction. In the imaging device, in the docking operation, the stereo camera may be rotated to take an image of a docking target and a water surface which are to the left of or to the right of the ship body in the ship body front-rear direction.

In the ship docking assisting apparatus 1 and the ship docking assisting method of the specific example of the embodiment, the imaging device 2 is a stereo camera. Alternatively, in the ship docking assisting apparatus and the ship docking assisting method of the present teaching, the imaging device may be a monocular camera, a TOF (Time Of Flight) camera, or a camera of another type. When the imaging device is a monocular camera, for example, at least one relative positional relation between the ship body ad the docking target is calculated based on the size of the object in the vicinity of the docking target, which has been known in advance. Alternatively, when the imaging device is a monocular camera, for example, at least one relative positional relation between the ship body and the docking target is calculated based on the height, from the water surface, of the object in the vicinity of the docking target, which has been known in advance. Alternatively, when the imaging device is a monocular camera, for example, at least one relative positional relation between the ship body and the docking target is calculated based on an optical flow. Alternatively, when the imaging device is a monocular camera, for example, at least one relative positional relation between the ship body and the docking target is calculated by obtaining a moving distance by using another sensor such as an odometer and an IMU (Inertial Measurement Unit). The imaging device may be constituted by a monocular camera, a TOF (Time Of Flight) camera, or a camera of another type and a movable device which allows the camera to be movable provided. Alternatively, the imaging device may be a portable terminal which is mounted on the ship and is portable. The portable terminal includes a camera such as a stereo camera. In this case, the imaging device may be arranged such that a portable terminal can be fixed to the ship. In this case, the imaging device may be constituted by a portable terminal and a movable device which allows the portable terminal to be movable.

In the ship docking assisting apparatus 1 and the ship docking assisting method of the specific example of the embodiment above, the display 4 includes a liquid crystal display. Alternatively, in the ship docking assisting apparatus and the ship docking assisting method of the present teaching, the display may be an organic EL display, a video projector, a plasma display, or a cathode ray tube.

In the ship docking assisting apparatus 1 and the ship docking assisting method of the specific example of the embodiment above, the ship docking assist processor 10 displays, on the display device M of the display 4, image information including the docking target D and the water surface W taken by the imaging device 2 (step S11). However, in the ship docking assisting apparatus and the ship docking assisting method of the present teaching, the ship docking assist processor may not display, on the display, image information including the docking target and the water surface taken by the imaging device.

In the ship docking assisting apparatus 1 and the ship docking assisting method of the specific example of the embodiment above, the ship docking assist processor 10 acquires information of the docking target set by the operator using the input device 5, while an image including the docking target and the water surface is displayed on the display 4 (step S12). Alternatively, in the ship docking assisting apparatus and the ship docking assisting method of the present teaching, the docking target may be input from the outside in advance. In other words, in the ship docking assisting apparatus and the ship docking assisting method of the present teaching, the feature points of the docking target may be set in advance. Alternatively, in the ship docking assisting apparatus and the ship docking assisting method of the present teaching, the ship docking assist processor may detect a place where the ship can be docked and set the detected place as the docking target.

In the ship docking assisting apparatus 1 and the ship docking assisting method of the specific example of the embodiment above, the ship docking assist processor 10 samples the docking target based on the feature points obtained from plural sets of image information, and calculates at least one relative positional relation. Alternatively, in the ship docking assisting apparatus and the ship docking assisting method of the present teaching, the ship docking assist processor may sample a docking target by means of machine learning or template matching, and calculate at least one relative positional relation. In the machine learning, the ship docking assist processor samples a docking target by searching image information for the docking target which is learned in advance. In the template matching, the ship docking assist processor searches image information for a region similar to a reference picture of a docking target, and samples the docking target.

In the ship docking assisting apparatus 1 and the ship docking assisting method of the specific example of the embodiment above, the ship docking assist processor 10 calculates the speed of the ship body 51 relative to the docking target, and stores the calculated speed as ship information. Alternatively, in the ship docking assisting apparatus and the ship docking assisting method of the present teaching, the ship docking assist processor may not calculate the speed of the ship body relative to the docking target.

In the ship docking assisting apparatus 1 and the ship docking assisting method of the specific example of the embodiment above, the ship docking assist processor 10 calculates a target angle, an approach angle, and a target distance and stores them as ship information. Alternatively, in the ship docking assisting apparatus and the ship docking assisting method of the present teaching, the ship docking assist processor may not calculate a target angle, an approach angle, and a target distance.

In the ship docking assisting apparatus 1 and the ship docking assisting method of the specific example of the embodiment above, the assist target device is the propulsion unit controller 20. The propulsion unit controller 20 generates a command signal for controlling the propulsion unit 53, by using output ship information. The propulsion unit controller 20 controls the propulsion unit 53 by the command signal. Alternatively, in the ship docking assisting apparatus and the ship docking assisting method of the present teaching, the propulsion unit controller may generate a command signal for controlling the propulsion unit by using the output ship information and in accordance with an operation by the operator. The propulsion unit controller controls the propulsion unit by using the command signal. To put it differently, the ship 50 is manually operated by the operator in this case. In addition to this, for example, the ship docking assist processor 10 generates a command signal for controlling the propulsion unit based on operations by the operator using the steering device 57, the remote controller unit 58, and the joy stick 59. The ship docking assist processor 10 therefore calculates the target steering angle based on the target angle α, the approach angle β, etc. stored in the storage device 3 as ship information. Furthermore, the ship docking assist processor 10 calculates a target throttle opening degree, a target shift position, and a target trim angle, based on the target distance γ, the relative speed of the ship 50, etc. The ship docking assist processor 10 then compares the operation amounts of the steering device 57, the remote controller unit 58, and the joy stick 59 operated by the operator with the target steering angle, the target throttle opening degree, the target shift position, and the target trim angle which have been calculated. The ship docking assist processor 10 adjusts the degree of change of the direction of the deflector 65, the amount of output of the engine unit 52, and the switching between the forward and rearward of the engine unit 52, based on the operation amounts of the steering device 57, the remote controller unit 58, and the joy stick 59 which are operated by the operator, and the target steering angle, the target throttle opening degree, the target shift position, and the target trim angle which have been calculated. In other words, the ship docking assist processor 10 assists the operations when the operation amounts of the steering device 57, the remote controller unit 58, and the joy stick 5 operated by the operator are different from the target steering angle, the target throttle opening degree, the target shift position, and the target trim angle which have been calculated. With this, the ship docking assisting apparatus and the ship docking assisting method of the present teaching are able to assist the operations by the operator in the approaching operation and docking operation until the ship is docked. In the propulsion unit controller 20 which is the assist target device, the ship information is easily used for assisting the docking of the ship. Because the ship information can be easily used, the ship information can be easily processed in the propulsion unit controller which is an assist target device. It is therefore possible to reduce the hardware resource by further improving the efficiency of the processing of the ship information in the propulsion unit controller which is an assist target device. The ship docking assisting apparatus and the ship docking assisting method of the present teaching are therefore able to assist the ship to be further accurately docked.

In the ship docking assisting apparatus and the ship docking assisting method of the present teaching, the assist target device may be a display. In this case, the ship docking assist processor outputs ship information from the storage device to the display. The display displays ship information or information generated based on the ship information. The ship 50 may be manually operated by the operator. To be more specific, for example, the display 4 may display relative positional relation which is ship information on the display device M. The display 4 may display, on the display device M, a target angle α, an approach angle β, a target distance γ, and relative speed of the ship 50 which are sets of ship information. Furthermore, the display 4 may calculate a target steering angle based on the target angle α and the approach angle β which are sets of ship information, and display the target steering angle on the display device M. Furthermore, the display 4 may calculate a target throttle opening degree, a target shift position, and a target trim angle based on the target distance γ and the relative speed of the ship 50, and display the calculated items on the display device M.

In the ship docking assisting apparatus and the ship docking assisting method of the present teaching, the assist target device may be a notification device. In this case, the ship docking assist processor outputs ship information from the storage device to the notification device. The notification device notifies ship information or information generated based on the ship information. The ship may be manually operated by the operator. To be more specific, for example, the notification device may calculate a target steering angle based on the target angle α and the approach angle β which are sets of ship information, and notify the target steering angle. Furthermore, the notification device may calculate a target throttle opening degree, a target shift position, and a target trim angle, based on the target distance γ and the relative speed of the ship, and notify the calculated items.

In the ship docking assisting apparatus and the ship docking assisting method of the present teaching, the assist target device may be at least two of the propulsion unit controller, the display, or the notification device.

### [Reference Signs List]

1 docking assisting apparatus
2 imaging device
3 storage device
4 display (assist target device)
5 input device
8 assist target device
10 ship docking assist processor
20 propulsion unit controller (assist target device)
50 ship
51 ship body
53 propulsion unit
D docking target
W water surface

## Claims

1. A ship docking assisting apparatus (1) for assisting docking of a ship (50) by outputting ship information related to the ship (50) to an assist target device (4, 8, 20), the assist target device (4, 8, 20) comprises a propulsion unit controller (20) and/or a display (4), comprising:
a storage device (3) configured to store information;
an imaging device (2) configured to be mounted on the ship (50) to be able to take an image of a docking target (D) and the water surface (W) which are located forward of the ship body (51), while the ship body (51) is moved forward in the ship body front-rear direction (F, B) by a propulsion unit (53); and
a ship docking assist processor (10) configured to assist and having the function of assisting docking of the ship (50), including an approaching operation that is an operation of causing the ship (50) to approach a shore at which the ship (50) is to be docked until the ship is positioned to be parallel or perpendicular to the shore and a docking operation that is performed after the ship (50) approaches the shore to some degree by the approaching operation, is different from the approaching operation, and is an operation to cause the ship (50) which is parallel or perpendicular to the shore to make contact with or come very close to the shore, by: acquiring image information which is taken by the imaging device (2) mounted on the ship (50) while a ship body (51) of the ship (50) is moved forward in a ship body front-rear direction by a propulsion unit (53) in the approaching operation and includes the docking target (D) and the water surface (W), the docking target (D) being an object which is the shore at which the ship (50) is docked or an object in the vicinity of the shore and is used as a mark when the ship (50) is docked; and the approaching operation and the docking operation being performed until the ship (50) is docked;
calculating at least one relative positional relation which indicates the relation in distance and direction between the ship body (51) of the ship (50) and the docking target (D), from plural sets of the image information including the docking target (D) and the water surface (W), which are acquired while the ship body (51) is moved forward in a ship body front-rear direction (F, B) by a propulsion unit (53) which is provided in the ship body (51) of the ship (50) to generate propulsion force for moving the ship body (51);
storing the at least one relative positional relation in the storage device (3) as the ship information; and
outputting, as the ship information, the at least one relative positional relation stored in the storage device (3) to the assist target device (4, 8, 20).

2. The ship docking assisting apparatus (1) according to claim 1, wherein, the ship docking assist processor (10) is configured to display an image including the docking target (D) and the water surface (W) on the display (4) which is configured to display information and mounted on the ship (50), based on image information taken by the imaging device (2) and
the ship docking assist processor (10) is configured to obtain information of the docking target (D) input by an operator by using an input device which allows input of information and is mounted on the ship (50), when the image including the docking target (D) and the water surface (W) is displayed on the display (4),
so that the ship the docking assist processor (10) is configured to allow the operator of the ship to set the docking target at will.

3. The ship docking assisting apparatus (1) according to claim 1 or 2, wherein, the ship docking assist processor (10) is configured to calculate relative speed of the ship body (51) from a plurality of the at least one relative positional relation, and is configured to store the relative speed of the ship body (51) relative to the docking target (D) in the storage device (3), as the ship information.

4. The ship docking assisting apparatus (1) according to any one of claims 1 to 3, wherein,
the ship docking assist processor (10) is configured to calculate, from the at least one relative positional relation, (i) a target angle (α) which is an angle between a bow direction (P) which is a current forward direction of the ship body (51) and a target direction (O) which is a direction of the docking target (D) relative to the ship body (51), (ii) an approach angle (β) which is an angle between the bow direction (P) and a docking direction (Q) which is a direction of a border line between a shore at which the ship body (51) is docked and the water surface (W), and (iii) a target distance (γ) which is the shortest distance between the ship body (51) and the docking target (D), and
the ship docking assist processor (10) is configured to store the target angle (α), the approach angle (β), and the target distance (γ) in the storage device (3) as the ship information.

5. The ship docking assisting apparatus (1) according to any one of claims 1 to 4, wherein,
the assist target device is the propulsion unit controller (20) which is able to control the propulsion unit (53),
the ship docking assist processor (10) is configured to output the ship information from the storage device (3) to the propulsion unit controller (20), and
the propulsion unit controller (20) is configured to generate a command signal for controlling the propulsion unit (53) by using the ship information, and is configured to control the propulsion unit (53) by the command signal so that the ship body (51) is automatically moved.

6. The ship docking assisting apparatus (1) according to any one of claims 1 to 4, wherein,
the assist target device is the propulsion unit controller (20) which is able to control the propulsion unit (53),
the ship docking assist processor (10) is configured to output the ship information from the storage device (3) to the propulsion unit controller (20), and
in accordance with an operation by an operator, the propulsion unit controller (20) is configured to generate a command signal for controlling the propulsion unit (53) by using the ship information output from the storage device (3), and is configured to control the propulsion unit (53) by the command signal.

7. The ship docking assisting apparatus (1) according to any one of claims 1 to 6, wherein,
the assist target device is the display (4) which is configured to display information, the ship docking assist processor (10) is configured to output the ship information from the storage device (3) to the display (4), and
the display (4) is configured to assist docking of the ship by displaying the ship information or information generated based on the ship information.

8. A ship docking assisting method of assisting, by using a ship docking assist processor (10), docking of a ship (50) including an approaching operation that is an operation of causing the ship (50) to approach a shore at which the ship (50) is to be docked until the ship is positioned to be parallel or perpendicular to the shore and a docking operation that is performed after the ship (50) approaches the shore to some degree by the approaching operation, is different from the approaching operation, and is an operation to cause the ship (50) which is positioned to be parallel or perpendicular to the shore to make contact with or come very close to the shore by outputting ship information related to the ship (50) to an assist target device (4, 8, 20),
the method comprising, under control of the ship docking assist processor (10), acquiring image information which is taken by an imaging device (2) mounted on the ship (50) while a ship body (51) of the ship (50) is moved forward in a ship body front-rear direction by a propulsion unit (53) in the approaching operation and includes a docking target (D) and a water surface (W), the docking target (D) being an object which is a shore at which the ship (50) is docked or an object in the vicinity of the shore and is used as a mark when the ship (50) is docked; and the approaching operation and the docking operation being performed until the ship (50) is docked;
calculating at least one relative positional relation which indicates the relation between a ship body (51) of the ship (50) and the docking target (D), from plural sets of the image information including the docking target (D) and the water surface (W), which are acquired while the ship body (51) is moved forward in a ship body front-rear direction (F, B) by the propulsion unit (53) which is provided in the ship body (51) of the ship (50) to generate propulsion force for moving the ship body (51) and the approaching operation;
storing the at least one relative positional relation in the storage device (3) as the ship information; and
outputting the ship information stored in the storage device (3) to the assist target device (4, 8, 20).

## Patentansprüche

1. Ein Schiffs-Anlege-Unterstützungs-Gerät (1) zur Unterstützung des Anlegens eines Schiffes (50) durch Ausgabe von Schiffsinformationen, die sich auf das Schiff (50) beziehen, an eine Unterstützungs-Ziel-Vorrichtung (4, 8, 20), die Unterstützungs-Ziel-Vorrichtung (4, 8, 20) weist eine Antriebseinheit-Steuerung (20) und/oder eine Anzeige (4) auf, die umfasst:
eine Speichervorrichtung (3), die zum Speichern von Informationen konfiguriert ist;
eine Bildgebungsvorrichtung (2), die konfiguriert ist, um auf dem Schiff (50) montiert zu werden, um ein Bild eines Anlegeziels (D) und der Wasseroberfläche (W) aufzunehmen, die sich vor dem Schiffskörper (51) befinden, während der Schiffskörper (51) durch eine Antriebseinheit (53) in der Schiffskörper-Vorder-Rück-Richtung (F, B) vorwärts bewegt wird; und
einen Schiffs-Anlege-Unterstützungs-Prozessor (10), der konfiguriert ist, zum Unterstützen und die Funktion hat für das Anlegen des Schiffes (50), einschließlich eines Annäherungsvorgangs, der ein Vorgang ist, der das Schiff (50) veranlasst, sich einem Ufer zu nähern, an dem das Schiff (50) anzulegen ist, bis das Schiff positioniert ist um parallel oder senkrecht zu dem Ufer zu sein und eines Anlegevorgangs, der durchgeführt wird, nachdem sich das Schiff (50) dem Ufer durch den Annäherungsvorgang bis zu einem gewissen Grad genähert hat, der sich von dem Annäherungsvorgang unterscheidet und ein Vorgang ist, der das Schiff (50), das parallel oder senkrecht zu dem Ufer ist, veranlasst, mit dem Ufer in Kontakt zu kommen oder ihm sehr nahe zu kommen, durch: Erfassen von Bildinformationen, die von der Bildgebungsvorrichtung (2), die auf dem Schiff (50) angebracht ist, aufgenommen werden, während ein Schiffskörper (51) des Schiffes (50) durch eine Antriebseinheit (53) im Annäherungsvorgang in einer Schiffskörper-Vorder-Rück-Richtung vorwärts bewegt wird und das Anlegeziel (D) und die Wasseroberfläche (W) einschließt, das Anlegeziel (D) ist ein Objekt, welches das Ufer, an dem das Schiff (50) anlegt, oder ein Objekt in der Nähe des Ufers ist und als eine Markierung verwendet wird, wenn das Schiff (50) anlegt; und der Annäherungsvorgang und der Anlegevorgang durchgeführt werden, bis das Schiff (50) angelegt hat;
Berechnen zumindest einer relativen Positionsbeziehung, welche die Beziehung in Entfernung und Richtung zwischen dem Schiffskörper (51) des Schiffes (50) und dem Anlegeziel (D) angibt, aus einer Mehrzahl von Sätzen der Bildinformationen einschließlich des Anlegeziels (D) und der Wasseroberfläche (W), die erfasst werden, während der Schiffskörper (51) durch eine Antriebseinheit (53), die in dem Schiffskörper (51) des Schiffes (50) vorgesehen ist, um eine Antriebskraft zum Bewegen des Schiffskörpers (51) zu erzeugen, in einer Schiffskörper-Vorder-Rück-Richtung (F, B) vorwärts bewegt wird;
Speichern der zumindest einen relativen Positionsbeziehung in der Speichervorrichtung (3) als Schiffsinformation; und
Ausgabe der zumindest einen in der Speichervorrichtung (3) gespeicherten relativen Positionsbeziehung als Schiffsinformation an die Unterstützungs-Ziel-Vorrichtung (4, 8, 20).

2. Das Schiffs-Anlege-Unterstützungs-Gerät (1) gemäß Anspruch 1, wobei Schiffs-Anlege-Unterstützungs-Prozessor (10) konfiguriert ist, um ein Bild, welches das Anlegeziel (D) und die Wasseroberfläche (W) enthält, auf der Anzeige (4) anzuzeigen, die konfiguriert ist, um Informationen anzuzeigen, und die auf dem Schiff (50) angebracht ist, basierend auf Bildinformationen, die von der Bildgebungsvorrichtung (2) aufgenommen wurden, und
der Schiffs-Anlege-Unterstützungs-Prozessor (10) konfiguriert ist, um Informationen über das Anlegeziel (D) zu erhalten, die von einem Bediener unter Verwendung einer Eingabevorrichtung eingegeben werden, welche die Eingabe von Informationen ermöglicht und auf dem Schiff (50) angebracht ist, wenn das Bild, welches das Anlegeziel (D) und die Wasseroberfläche (W) enthält, auf der Anzeige (4) angezeigt wird,
so dass der Schiffs-Anlege-Unterstützungs-Prozessor (10) konfiguriert ist, um dem Bediener des Schiffes zu erlauben das Anlegeziel bewusst einzustellen.

3. Das Schiffs-Anlege-Unterstützungs-Gerät (1) gemäß Anspruch 1 oder 2, wobei,
der Schiffs-Anlege-Unterstützungs-Prozessor (10) konfiguriert ist, um die Relativgeschwindigkeit des Schiffskörpers (51) aus einer Mehrzahl der zumindest einen relativen Positionsbeziehung zu berechnen, und
konfiguriert ist, um die Relativgeschwindigkeit des Schiffskörpers (51) relativ zum Anlegeziel (D) als Schiffsinformation in der Speichervorrichtung (3) zu speichern.

4. Das Schiffs-Anlege-Unterstützungs-Gerät (1) gemäß irgendeinem der Ansprüche 1 bis 3, wobei,
der Schiffs-Anlege-Unterstützungs-Prozessor (10) konfiguriert ist, um aus der zumindest einen relativen Positionsbeziehung (i) einen Zielwinkel (α) zu berechnen, der ein Winkel zwischen einer Bugrichtung (P), die eine aktuelle Vorwärtsrichtung des Schiffskörpers (51) ist, und einer Zielrichtung (O) ist, die eine Richtung des Anlegeziels (D) relativ zum Schiffskörper (51) ist, (ii) einem Annäherungswinkel (β),
der ein Winkel zwischen der Bugrichtung (P) und einer Anlegerichtung (Q) ist, die eine Richtung einer Grenzlinie zwischen einem Ufer, an dem der Schiffskörper (51) anlegt, und der Wasseroberfläche (W) ist, und (iii) einer Zieldistanz (γ), welche die kürzeste Distanz zwischen dem Schiffskörper (51) und dem Anlegeziel (D) ist, und der Schiffs-Anlege-Unterstützungs-Prozessor (10) konfiguriert ist, um den Zielwinkel (α), den Annäherungswinkel (β) und die Zieldistanz (γ) in der Speichervorrichtung (3) als die Schiffsinformationen zu speichern.

5. Das Schiffs-Anlege-Unterstützungs-Gerät (1) gemäß irgendeinem der Ansprüche 1 bis 4, wobei,
die Unterstützungs-Ziel-Vorrichtung die Antriebseinheit-Steuerung (20) ist, die in der Lage ist, die Antriebseinheit (53) zu steuern,
der Schiffs-Anlege-Unterstützungs-Prozessor (10) konfiguriert ist, um die Schiffsinformationen von der Speichervorrichtung (3) an die Antriebseinheit-Steuerung (20) auszugeben, und
die Antriebseinheit-Steuerung (20) konfiguriert ist, um ein Befehlssignal zum Steuern der Antriebseinheit (53) unter Verwendung der Schiffsinformationen zu erzeugen, und konfiguriert ist, um die Antriebseinheit (53) durch das Befehlssignal zu steuern, so dass der Schiffskörper (51) automatisch bewegt wird.

6. Das Schiffs-Anlege-Unterstützungs-Gerät (1) gemäß irgendeinem der Ansprüche 1 bis 4, wobei,
die Unterstützungs-Ziel-Vorrichtung die Antriebseinheit-Steuerung (20) ist, die in der Lage ist, die Antriebseinheit (53) zu steuern,
der Schiffs-Anlege-Unterstützungs-Prozessor (10) konfiguriert ist, um die Schiffsinformationen von der Speichervorrichtung (3) an die Antriebseinheit-Steuerung (20) auszugeben, und
die Antriebseinheit-Steuerung (20) konfiguriert ist, um in Übereinstimmung mit einer Bedienung durch einen Bediener ein Befehlssignal zum Steuern der Antriebseinheit (53) unter Verwendung der von der Speichervorrichtung (3) ausgegebenen Schiffsinformationen zu erzeugen, und konfiguriert ist, um die Antriebseinheit (53) durch das Befehlssignal zu steuern.

7. Das Schiffs-Anlege-Unterstützungs-Gerät (1) gemäß irgendeinem der Ansprüche 1 bis 6, wobei,
die Unterstützungs-Ziel-Vorrichtung ist die Anzeige (4), die konfiguriert ist, um die Informationen anzuzeigen,
der Schiffs-Anlege-Unterstützungs-Prozessor (10) konfiguriert ist, um die Schiffsinformationen von der Speichervorrichtung (3) an die Anzeige (4) auszugeben, und
die Anzeige (4) konfiguriert ist, um das Anlegen des Schiffes unterstützt, durch Anzeigen der Schiffsinformationen oder von Informationen, die auf der Grundlage der Schiffsinformationen erzeugt sind.

8. Ein Schiffs-Anlege-Unterstützungs-Verfahren zur Unterstützung, unter Verwendung eines Schiffs-Anlege-Unterstützungs-Prozessors (10), beinhaltet Anlegen eines Schiffes (50) mit einem Annäherungsvorgang, der ein Vorgang ist, der das Schiff (50) veranlasst, sich einem Ufer zu nähern, an dem das Schiff (50) parallel oder senkrecht zu dem Ufer ist, angedockt ist, und einem Anlegevorgang, der durchgeführt wird, nachdem sich das Schiff (50) durch den Annäherungsvorgang bis zu einem gewissen Grad dem Ufer nähert, sich von dem Annäherungsvorgang unterscheidet und ein Vorgang ist, der das Schiff (50), das parallel oder senkrecht zu dem Ufer ist, veranlasst, mit dem Ufer in Kontakt zu kommen oder sich diesem sehr zu nähern, indem Schiffsinformationen, die sich auf das Schiff (50) beziehen, an eine Unterstützungs-Ziel-Vorrichtung (4, 8, 20) ausgegeben werden,
das Verfahren umfasst, unter Steuerung des Schiffs-Anlege-Unterstützungs-Prozessors (10),
Erfassen von Bildinformationen, die von einer Bildgebungsvorrichtung (2) aufgenommen werden, die an dem Schiff (50) angebracht ist, während ein Schiffskörper (51) des Schiffes (50) bei dem Annäherungsvorgang durch eine Antriebseinheit (53) in einer Schiffskörper-Vorder-Rück-Richtung vorwärts bewegt wird und ein Anlegeziel (D) und eine Wasseroberfläche (W) enthält, wobei das Anlegeziel (D) ein Objekt ist, das ein Ufer, an dem das Schiff (50) anlegt, oder ein Objekt in der Nähe des Ufers ist und als eine Markierung verwendet wird, wenn das Schiff (50) anlegt; und der Annäherungsvorgang und der Anlegevorgang durchgeführt werden, bis das Schiff (50) angelegt hat;
Berechnen zumindest einer relativen Positionsbeziehung, welche die Beziehung zwischen einem Schiffskörper (51) des Schiffes (50) und dem Anlegeziel (D) angibt, aus einer Mehrzahl von Sätzen der Bildinformationen einschließlich des Anlegeziels (D) und der Wasseroberfläche (W), die erfasst werden, während der Schiffskörper (51) durch die Antriebseinheit (53), die in dem Schiffskörper (51) des Schiffes (50) vorgesehen ist, in einer Schiffskörper-Vorder-Rück-Richtung (F, B) vorwärts bewegt wird, um eine Antriebskraft zum Bewegen des Schiffskörpers (51) und den Annäherungsvorgang zu erzeugen;
Speichern der zumindest einen relativen Positionsbeziehung in der Speichervorrichtung (3) als Schiffsinformation; und
Ausgeben der Schiffsinformationen, die in der Speichervorrichtung (3) gespeichert sind an die Unterstützungs-Ziel-Vorrichtung (4, 8, 20).

## Revendications

1. Appareil d'assistance à l'amarrage d'un navire (1) pour assister l'amarrage d'un navire (50) en sortant des informations de navire liées au navire (50) vers un dispositif cible d'assistance (4, 8, 20), le dispositif cible d'assistance (4, 8, 20) comprend un contrôleur d'unité de propulsion (20) et/ou un affichage (4), comprenant :
un dispositif de stockage (3) configuré pour stocker des informations ;
un dispositif d'imagerie (2) configuré pour être monté sur le navire (50) afin de pouvoir prendre une image d'une cible d'amarrage (D) et de la surface de l'eau (W) qui sont situées à l'avant du corps de navire (51), tandis que le corps de navire (51) est déplacé vers l'avant dans le sens avant-arrière (F, B) du corps de navire par une unité de propulsion (53) ; et
un processeur d'assistance à l'amarrage de navires (10) configuré pour assister et ayant la fonction d'assister l'amarrage du navire (50), incluant une opération d'approche qui est une opération consistant à amener le navire (50) à s'approcher d'un rivage auquel le navire (50) doit être amarré jusqu'à ce que le navire soit positionné pour être parallèle ou perpendiculaire au rivage et une opération d'amarrage qui est effectuée après que le navire (50) se soit approché du rivage à un certain degré par l'opération d'approche, est différente de l'opération d'approche, et est une opération pour faire en sorte que le navire (50) qui est parallèle ou perpendiculaire au rivage entre en contact avec ou s'approche très près du rivage, par : l'acquisition d'informations d'image qui sont prises par le dispositif d'imagerie (2) monté sur le navire (50) tandis qu'un corps de navire (51) du navire (50) est déplacé vers l'avant dans un sens avant-arrière du corps de navire par une unité de propulsion (53) dans l'opération d'approche et inclut la cible d'amarrage (D) et la surface de l'eau (W), la cible d'amarrage (D) étant un objet qui est le rivage auquel le navire (50) est amarré ou un objet à proximité du rivage et est utilisé comme une marque lorsque le navire (50) est amarré ; et l'opération d'approche et l'opération d'amarrage étant effectuées jusqu'à ce que le navire (50) soit amarré ;
le fait de calculer au moins une relation de position relative qui indique la relation en distance et en sens entre le corps de navire (51) du navire (50) et la cible d'amarrage (D), à partir de plusieurs ensembles d'informations d'image incluant la cible d'amarrage (D) et la surface de l'eau (W), qui sont acquises pendant que le corps de navire (51) est déplacé vers l'avant dans un sens avant-arrière (F, B) du corps de navire par une unité de propulsion (53) qui est prévue dans le corps de navire (51) du navire (50) pour générer une force de propulsion pour déplacer le corps de navire (51) ;
le fait de stocker l'au moins une relation de position relative dans le dispositif de stockage (3) en tant qu'informations sur le navire ; et
le fait de sortir, en tant qu'informations sur le navire, l'au moins une relation de position relative stockée dans le dispositif de stockage (3) au dispositif cible d'assistance (4, 8, 20).

2. Appareil d'assistance à l'amarrage d'un navire (1) selon la revendication 1, dans lequel, le processeur d'assistance à l'amarrage de navires (10) est configuré pour afficher une image incluant la cible d'amarrage (D) et la surface de l'eau (W) sur l'affichage (4) qui est configuré pour afficher des informations et monté sur le navire (50), sur la base d'informations d'image prises par le dispositif d'imagerie (2), et
le processeur d'assistance à l'amarrage de navires (10) est configuré pour obtenir des informations de la cible d'amarrage (D) entrées par un opérateur en utilisant un dispositif d'entrée qui permet l'entrée d'informations et est monté sur le navire (50), lorsque l'image comprenant la cible d'amarrage (D) et la surface de l'eau (W) est affichée sur l'affichage (4),
de sorte que le processeur d'assistance à l'amarrage de navires (10) est configuré pour permettre à l'opérateur du navire de régler la cible d'amarrage à volonté.

3. Appareil d'assistance à l'amarrage d'un navire (1) selon la revendication 1 ou 2, dans lequel,
le processeur d'assistance à l'amarrage de navires (10) est configuré pour calculer la vitesse relative du corps de navire (51) à partir d'une pluralité de l'au moins une relation de position relative, et
est configuré pour stocker la vitesse relative du corps de navire (51) par rapport à la cible d'amarrage (D) dans le dispositif de stockage (3), en tant qu'informations sur le navire.

4. Appareil d'assistance à l'amarrage d'un navire (1) selon l'une quelconque des revendications 1 à 3 dans lequel,
le processeur d'assistance à l'amarrage de navires (10) est configuré pour calculer, à partir de l'au moins une relation de position relative, (i) un angle cible (α) qui est un angle entre un sens de proue (P) qui est un sens avant actuel du corps de navire (51) et un sens cible (O) qui est un sens de la cible d'amarrage (D) par rapport au corps de navire (51), (ii) un angle d'approche (β) qui est un angle entre le sens de proue (P) et un sens d'amarrage (Q) qui est un sens d'une ligne de frontière entre un rivage auquel le corps de navire (51) est amarré et la surface de l'eau (W), et (iii) une distance cible (γ) qui est la distance la plus courte entre le corps de navire (51) et la cible d'amarrage (D), et
le processeur d'assistance à l'amarrage de navires (10) est configuré pour stocker l'angle cible (α), l'angle d'approche (β) et la distance cible (γ) dans le dispositif de stockage (3) en tant qu'informations sur le navire.

5. Appareil d'assistance à l'amarrage d'un navire (1) selon l'une quelconque des revendications 1 à 4 dans lequel,
le dispositif cible d'assistance est le contrôleur d'unité de propulsion (20) qui est capable de commander l'unité de propulsion (53),
le processeur d'assistance à l'amarrage de navires (10) est configuré pour sortir les informations relatives au navire du dispositif de stockage (3) au contrôleur d'unité de propulsion (20), et
le contrôleur d'unité de propulsion (20) est configuré pour générer un signal de commande pour commander l'unité de propulsion (53) en utilisant les informations sur le navire, et est configuré pour commander l'unité de propulsion (53) par le signal de commande de sorte que le corps de navire (51) soit automatiquement déplacé.

6. Appareil d'assistance à l'amarrage d'un navire (1) selon l'une quelconque des revendications 1 à 4 dans lequel,
le dispositif cible d'assistance est le contrôleur d'unité de propulsion (20) qui est capable de commander l'unité de propulsion (53),
le processeur d'assistance à l'amarrage de navires (10) est configuré pour sortir les informations relatives au navire du dispositif de stockage (3) au contrôleur d'unité de propulsion (20), et
conformément à une opération effectuée par un opérateur, le contrôleur d'unité de propulsion (20) est configuré pour générer un signal de commande pour commander l'unité de propulsion (53) en utilisant les informations sur le navire sorties du dispositif de stockage (3), et est configuré pour commander l'unité de propulsion (53) par le signal de commande.

7. Appareil d'assistance à l'amarrage d'un navire (1) selon l'une quelconque des revendications 1 à 6 dans lequel,
le dispositif cible d'assistance est l'affichage (4) qui est configuré pour afficher des informations, le processeur d'assistance à l'amarrage de navires (10) est configuré pour sortir les informations sur le navire du dispositif de stockage (3) vers l'affichage (4), et
l'affichage (4) est configuré pour aider à l'amarrage du navire en affichant les informations sur le navire ou les informations générées sur la base des informations sur le navire.

8. Procédé d'assistance à l'amarrage d'un navire pour assister, en utilisant un processeur d'assistance à l'amarrage de navires (10), l'amarrage d'un navire (50) incluant une opération d'approche qui est une opération consistant à amener le navire (50) à s'approcher d'un rivage auquel le navire (50) doit être amarré jusqu'à ce que le navire soit positionné pour être parallèle ou perpendiculaire au rivage et une opération d'amarrage qui est effectuée après que le navire (50) se soit approché du rivage à un certain degré par l'opération d'approche, est différente de l'opération d'approche, et est une opération pour faire en sorte que le navire (50) qui est positionné pour être parallèle ou perpendiculaire au rivage entre en contact avec ou s'approche très près du rivage en sortant des informations de navire liées au navire (50) vers un dispositif cible d'assistance (4, 8, 20),
le procédé comprenant, sous la commande du processeur d'assistance à l'amarrage de navires (10), l'acquisition d'informations d'image qui sont prises par un dispositif d'imagerie (2) monté sur le navire (50) tandis qu'un corps de navire (51) du navire (50) est déplacé vers l'avant dans un sens avant-arrière du corps de navire par une unité de propulsion (53) dans l'opération d'approche et inclut une cible d'amarrage (D) et une surface de l'eau (W), la cible d'amarrage (D) étant un objet qui est un rivage auquel le navire (50) est amarré ou un objet à proximité du rivage et est utilisé comme une marque lorsque le navire (50) est amarré ; et l'opération d'approche et l'opération d'amarrage étant effectuées jusqu'à ce que le navire (50) soit amarré ;
calculer au moins une relation de position relative qui indique la relation entre un corps de navire (51) du navire (50) et la cible d'amarrage (D), à partir de plusieurs ensembles d'informations d'image incluant la cible d'amarrage (D) et la surface de l'eau (W), qui sont acquises pendant que le corps de navire (51) est déplacé vers l'avant dans un sens avant-arrière (F, B) du corps de navire par l'unité de propulsion (53) qui est prévue dans le corps de navire (51) du navire (50) pour générer une force de propulsion pour déplacer le corps de navire (51) et l'opération d'approche ;
stocker l'au moins une relation de position relative dans le dispositif de stockage (3) en tant qu'informations sur le navire ; et
sortir les informations sur le navire stockées dans le dispositif de stockage (3) au dispositif cible d'assistance (4, 8, 20).
